(19) **Europäisches Patentamt / European Patent Office / Office européen des brevets**

(11) **EP 4 694 402 A1**

(12) **EUROPEAN PATENT APPLICATION**
published in accordance with Art. 153(4) EPC

(43) Date of publication:
**11.02.2026 Bulletin 2026/07**

(21) Application number: **24733843.7**

(22) Date of filing: **05.04.2024**

(51) International Patent Classification (IPC):
$H04W\ 56/00$ (2009.01)     $H04W\ 72/231$ (2023.01)
$H04W\ 72/21$ (2023.01)     $H04L\ 5/00$ (2006.01)
$H04W\ 76/27$ (2018.01)     $H04W\ 52/24$ (2009.01)

(52) Cooperative Patent Classification (CPC):
H04L 5/00; H04W 52/24; H04W 56/00;
H04W 72/21; H04W 72/231; H04W 76/27

(86) International application number:
**PCT/KR2024/004495**

(87) International publication number:
**WO 2024/210603 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 US 202363457771 P**
**11.05.2023 KR 20230061287**
**11.05.2023 KR 20230061328**

(71) Applicant: **LG Electronics Inc.**
**Seoul 07336 (KR)**

(72) Inventors:
• **HWANG, Seunggye**
  **Seoul 06772 (KR)**
• **KIM, Kijun**
  **Seoul 06772 (KR)**
• **KO, Hyunsoo**
  **Seoul 06772 (KR)**
• **SHIM, Jaenam**
  **Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR TRANSMITTING AND RECEIVING SIGNAL IN WIRELESS COMMUNICATION SYSTEM**

(57)     According to at least one of the embodiments disclosed in the present specification, a method of transmitting a sounding reference signal (SRS) by a user equipment (UE) in a wireless communication system includes: receiving an SRS configuration related to a plurality of cells including a first cell through the first cell; and transmitting an SRS for positioning based on the SRS configuration in a radio resource control (RRC) inactive state, wherein a timing advance (TA) value for the SRS transmission may be determined based on whether a cell in which the UE locates at a current time that the SRS is transmitted is the first cell which has provided the SRS configuration.

**FIG. 19**

Receive configuration supporting multi-cell for positioning — C05

Transmit SRS in RRC inactive state — C10

Description

## TECHNICAL FIELD

The present disclosure relates to a wireless communication system, and more particularly, to a method and apparatus for transmitting or receiving uplink/downlink signals.

## BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

## DISCLOSURE

## TECHNICAL PROBLEM

An object of the disclosure is to provide a method and device for transmitting or receiving signals more accurately and efficiently in a wireless communication system.

The object of the disclosure is not limited to this, and other objects may be inferred from the disclosed embodiments.

## TECHNICAL SOLUTION

In an aspect of the present disclosure, provided herein is a method of transmitting a sounding reference signal (SRS) by a user equipment (UE) in a wireless communication system. The method includes: receiving an SRS configuration related to a plurality of cells including a first cell through the first cell; and transmitting an SRS for positioning based on the SRS configuration in a radio resource control (RRC) inactive state. A timing advance (TA) value for the SRS transmission may be determined based on whether a cell in which the UE locates at a current time that the SRS is transmitted is the first cell which has provided the SRS configuration.

Based on that the cell in which the UE locates is a second cell different from the first cell, the TA value for the SRS transmission may be autonomously determined by the UE.

The SRS transmission may be performed based on a determination that the TA value autonomously determined by the UE is valid for the second cell.

The SRS configuration may include information regarding a range of TA values that the UE is capable of autonomously determining.

The information regarding the range of TA values may be related to at least one of: i) a maximum or minimum TA value; ii) a maximum variation in an initial TA value obtained at a time that the SRS configuration has been received; or iii) a maximum variation in a previous TA value.

The second cell may be one of cells in which the UE is allowed to autonomously determine TA values.

The SRS configuration includes a list of cells in which the UE is allowed to autonomously determine TA values.

Based on that the cell in which the UE locates is the first cell which has provided the SRS configuration, the TA value for the SRS transmission may be determined as an initial TA value obtained at a time that the SRS configuration has been received.

The SRS configuration may include information related to TA validity determination,

The SRS configuration may be received via an RRC message instructing to transition from an RRC connected state to the RRC inactive state.

In another aspect of the present disclosure, provided herein is a processor-readable recording medium having recorded thereon a program for executing the above-described method.

In another aspect of the present disclosure, provided herein is a device for wireless communication. The device may include: a memory configured to store instructions; and a processor configured to perform operations by executing the instructions. The operations of the processor may include: receiving an SRS configuration related to a plurality of cells including a first cell through the first cell; and transmitting an SRS for positioning based on the SRS configuration in an RRC inactive state. Based on whether a cell in which the device locates at a current time that the SRS is transmitted is the first cell which has provided the SRS configuration, a TA value for the SRS transmission may be determined.

The device may further include a transceiver.

The device may be a UE operating in a wireless communication system.

The device may be a processing device configured to control a UE operating in a

In another aspect of the present disclosure, provided herein is a method of receiving an SRS by at least one base station (BS) in a wireless communication system. The method includes: transmitting an SRS configuration related to a plurality of cells including a first cell to a UE through the first cell; and receiving an SRS for positioning based on the SRS configuration from the UE in an RRC inactive state. The at least one BS may configure the UE to determine a TA value for transmission of the SRS based on whether a cell in which the UE locates is the first cell which has provided the SRS configuration.

In another aspect of the present disclosure, provided herein is a device having at least one BS. The device may include: at least one memory configured to store instructions; and at least one processor configured to perform operations by executing the instructions. The operations of the at least one processor may include: transmitting an SRS configuration related to a plurality of cells including a first cell to a UE through the first cell; and receiving an SRS for positioning based on the SRS configuration from the UE in an RRC inactive state. The at least one processor may configure the UE to determine a TA value for transmission of the SRS based on whether a cell in which the UE locates is the first cell which has provided the SRS configuration.

## ADVANTAGEOUS EFFECTS

According to an embodiment of the present disclosure, a signal can be more accurately and efficiently transmitted or received in a wireless communication system.

The effect of the disclosure is not limited to this, and other advantageous effects may be inferred from the disclosed embodiments.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot

FIG. 5 illustrates an exemplary physical downlink shared channel (PDSCH) reception and acknowledgement/negative acknowledgement (ACK/NACK) transmission process.

FIG. 6 illustrates an exemplary physical uplink shared channel (PUSCH) transmission process.

FIG. 7 illustrates an example of setting a positioning protocol.

FIG. 8 illustrates an example of OTDOA.

FIG. 9 illustrates an example of Multi RTT.

FIG. 10 illustrates a procedure for operating a network node (e.g., an upper node of a user equipment (UE), location management function (LMF), etc.) according to an embodiment.

FIG. 11 illustrates a UE operation procedure for performing positioning measurement.

FIG. 12 illustrates various integrated sensing and communication (ISAC) environments.

FIG. 13 is a diagram for explaining an issue that timing advance (TA) conditions are not valid at the boundary regions of two cells depending on the value of a reference signal received power (RSRP) change threshold.

FIG. 14 is a diagram for explaining a potential issue that may arise when an RSRP change threshold is set to a high value or not applied.

FIG. 15 illustrates an example of using multiple pathloss reference signals for measurement (PLRSs-M) and RSRP values related thereto.

FIG. 16 illustrates an example of SRS transmission based on TA validation/adjustment.

FIG. 17 is a diagram for explaining areas where TA validation conditions based on RSRP are satisfied (or dissatisfied).

FIG. 18 is a diagram for explaining operations of a UE and a network in a wireless communication system according to an embodiment.

FIG. 19 illustrates a flowchart of a method by which a UE transmits an SRS according to an embodiment.

FIG. 20 illustrates a flowchart of a method by which a device including at least one BS receives an SRS according to an embodiment.

FIGS. 21 to 24 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

In this specification, the term "base station" ma be replaced with terms such as fixed station, Node B, gNode B (gNB), access point (AP), cell, transmission and reception point (TRP), etc. The term "relay" may be replaced with terms such as relay node (RN), relay station, etc. The term "terminal" may be replaced with terms such as user equipment (UE), mobile station (MS), mobile subscriber station (MSS), subscriber station (SS), etc.

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321 Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol
- 38.455: NG-RAN; NR Positioning Protocol A (NRPPa)

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System

- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

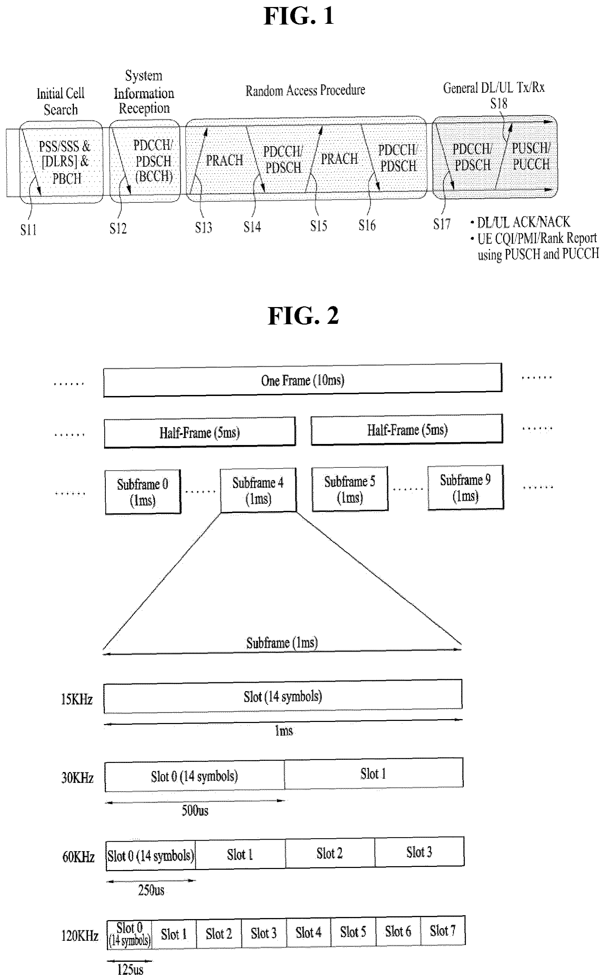

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

$N^{slot}_{symb}$: Number of symbols in a slot

$N^{frame,u}_{slot}$: Number of slots in a frame

$N^{subframe,u}_{slot}$: Number of slots in a subframe

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

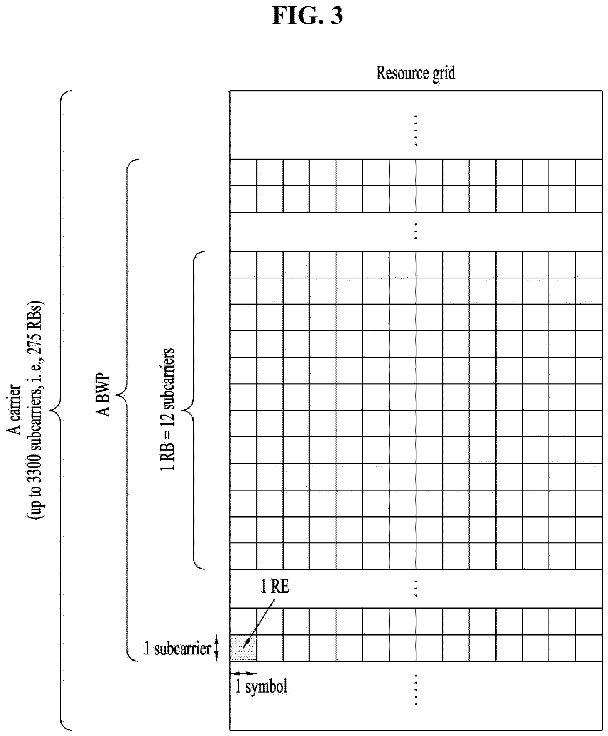

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

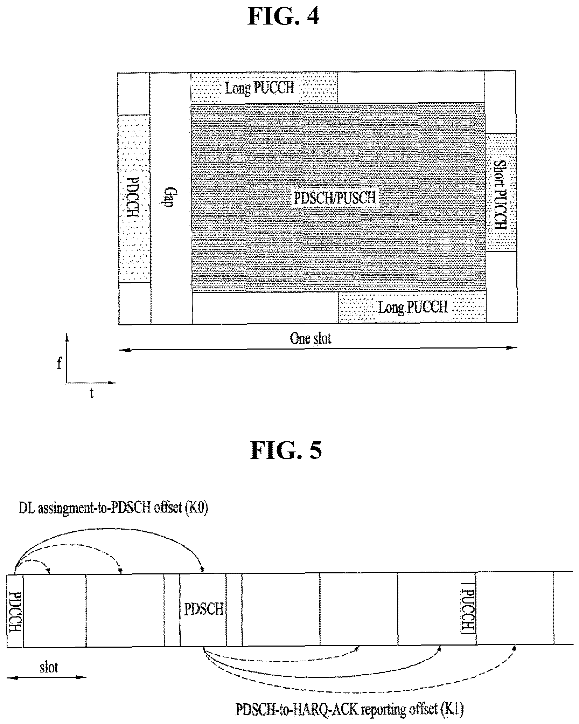

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

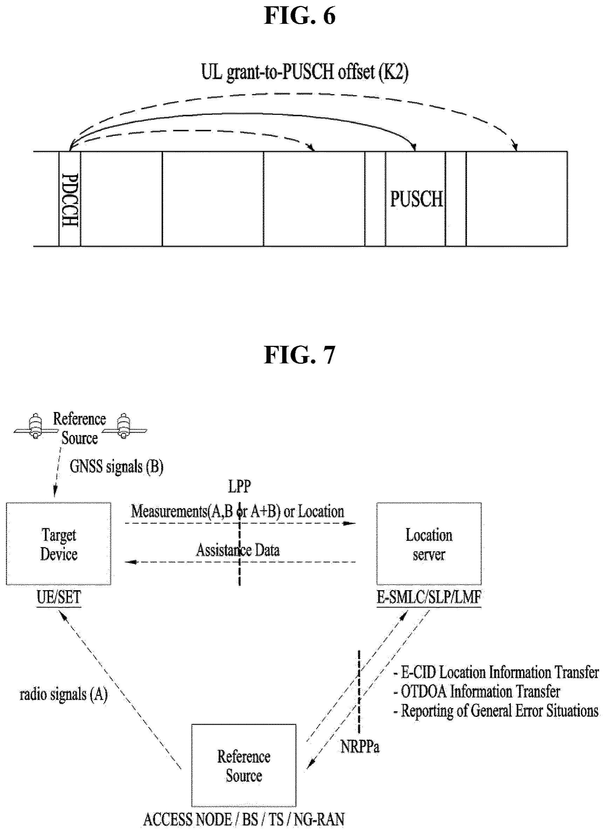

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.

- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

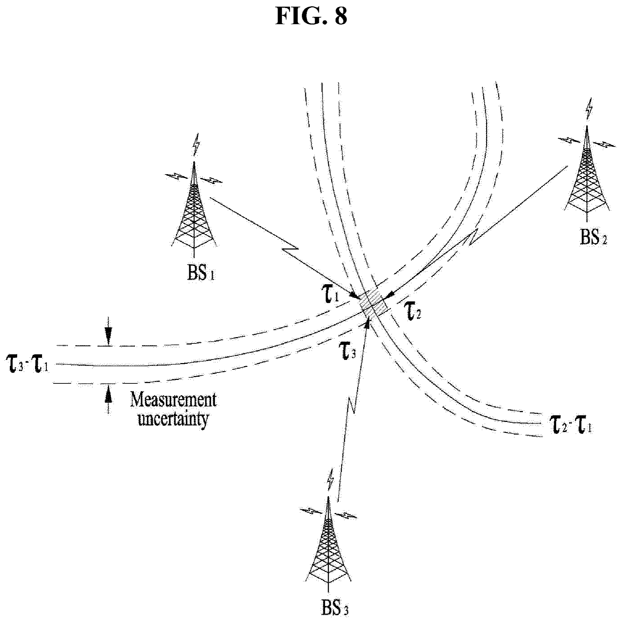

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTD_{i,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$$T_{ADV} \text{ Type } 1 = (\text{ng-eNB Rx-Tx time difference}) + (\text{UE E-UTRA Rx-Tx time difference})$$

$$T_{ADV} \text{ Type } 2 = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

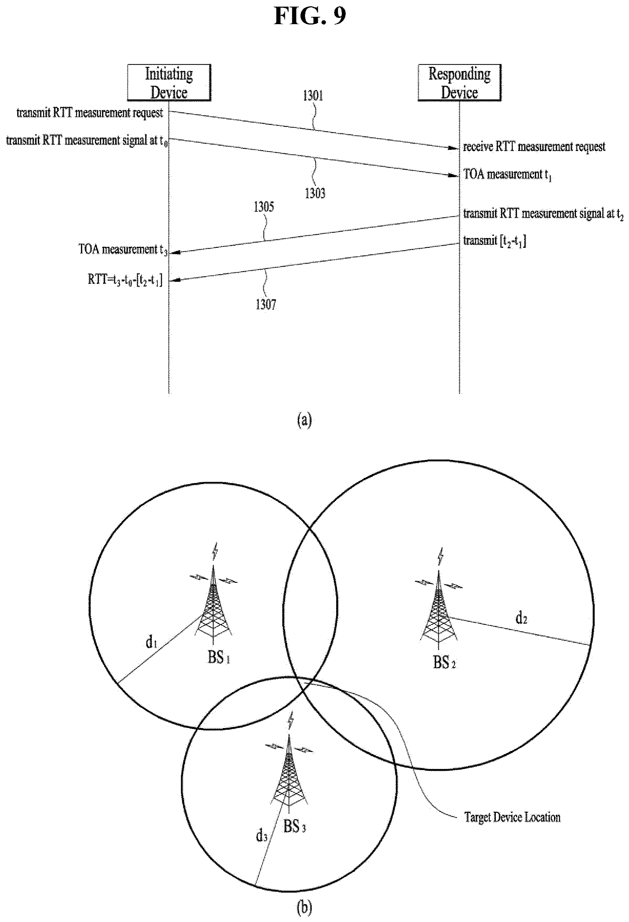

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at $t_0$ and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$RTT = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

NG-RAN positioning architecture and procedures

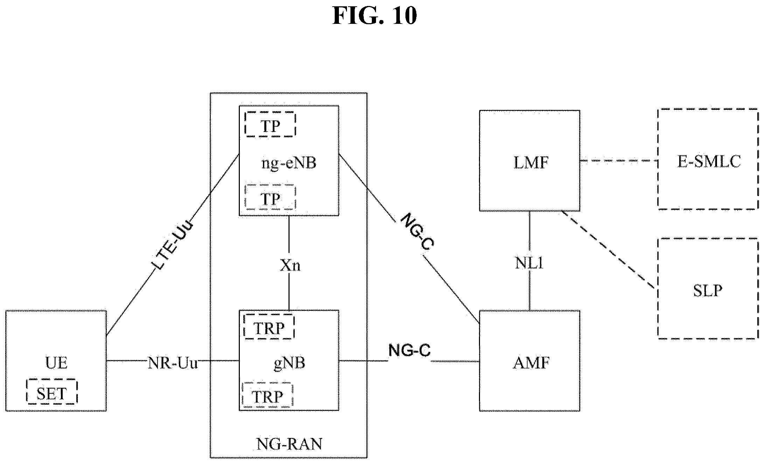

FIG. 10 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE) or may decide to initiate the location services itself on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. When the location services are requested by other entities (e.g., GMLC or UE), the AMF transmits the location service results to the other entities.

An NG-RAN node may control TRPs/TPs such as RRM or DL-PRS only TPs to support a PRS-based terrestrial beacon system (TBS).

The LMF may be connected to an enhanced serving mobile location centre (E-SMLC) to access universal terrestrial radio access network (UTRAN) information.

The LMF can be connected to a secure user plane location (SUPL) location platform (SLP), which is responsible for positioning relative to the user plane.

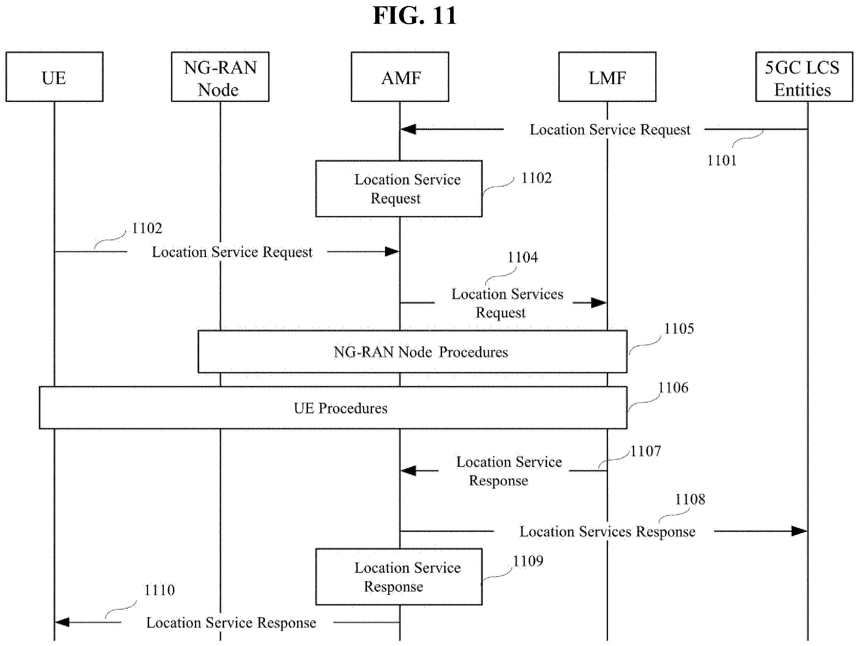

FIG. 11 illustrates an example of location services supported in a NG-RAN.

When a UE is in a connection management idle (CM-IDLE) state, if an AMF receives a location service request, the AMF performs a network trigger service request to configure signaling for a connection to the UE and allocation of a specific serving gNB/ng-eNB. In FIG. 11, it is assumed that the UE is in the connected mode.

Location service requests for the UE may be triggered, and the requests for the UE may be one of steps 1101, 1102, and 1103. For example, an entity in a 5GC such as a GMLC may request location services (e.g., positioning) for a target UE from a serving AMF (1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNBs (1105).

(Instead of or additionally to step 1105) The LMF initiates the positioning procedure with the UE to obtain location estimates or positioning measurements or transmit location assistance data to the UE (1106).

The LMF provides a location service response to the AMF (1107) (e.g., success or failure and location estimates for the UE if obtained).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).

(In step 1103) The AMF provides the location service response to the UE (1110) (e.g., location estimates for the UE).

**SRS (Sounding Reference Signal) for Positioning**

In Rel. 15 NR systems, periodic, aperiodic, and semi-persistent Rel. 15 SRSs may be transmitted for UL relative time of arrival (UL RTOA), UL SRS-RSRP, and UL-AOA measurements at the BS, thereby supporting UL TDOA and UL AOA.

In Rel. 16/17 NR systems, periodic, aperiodic, and semi-persistent SRSs for positioning may be transmitted for UL RTOA, UL SRS-RSRP, UL-AOA, and gNB Rx-Tx time difference measurements at the BS, thereby supporting for UL TDOA, UL AOA, and multi-RTT.

To prevent confusion between the Rel. 15 SRS and SRS for positioning, the SRS for positioning will be referred to as an SRS-p. Unless otherwise specified, the SRS may be interpreted to mean the SRS-p in the newly proposed methods in this specification.

If a higher layer parameter SRS-PosResource is configured for the SRS (i.e., SRS-p) and a higher layer parameter SpatialRelationInfoPos is configured, the ID of a configuration field of a reference RS is provided. The reference RS may be an SRS configured by the higher layer parameter SRS-Resource or SRS-PosResource, a CSI-RS, an SS/PBCH block, a DL PRS of the serving cell, or a DL PRS configured in the SS/PBCH block.

The UE is not expected to transmit multiple SRS resources with different spatial relationships on the same OFDM symbol.

If the higher layer parameter SpatialRelationInfoPos is not configured, the UE may use either a fixed spatial domain transmission filter or a different spatial domain transmission filter to transmit the SRS-p configured by the higher layer parameter SRS-PosResource across multiple SRS resources.

In the RRC_CONNECTED mode, the UE transmits the SRS-p configured by the higher layer parameter SRS-PosResource within an active UL BWP.

Only one RS source is provided for the higher layer parameter SpatialRelationInfoPos provided for each SRS-p resource.

In the case of operation on the same carrier, if the SRS-p conflicts with a scheduled PUSCH, the SRS-p is dropped on symbols where the collision occurs.

The UE does not expect that SRS-PosResource will be configured on the carrier of the serving cell with a slot format consisting of DL/UL symbols that are not configured for PUSCH/PUCCH transmission.

Depending on UE capabilities, SRS-p resources associated with an initial UL BWP may be configured, and the SRS-p resources are transmitted within the initial UL BWP in the RRC_INACTIVE mode with the same CP and SCS as configured for the initial UL BWP. Depending on UE capabilities, SRS-p resources for positioning may be configured outside the initial BWP in the RRC_INACTIVE mode, and a frequency location, bandwidth, SCS, and CP length may be configured for SRS-p transmission. The SRS-p resources configured outside the initial BWP in the RRC_INACTIVE mode are configured in the same bandwidth and CC as the initial UL BWP.

### ISAC (Integrated Sensing and Communication)

Various methods for using wireless sensing are being widely discussed in recent wireless communication systems. In general, the conventional radar technology may be considered for the purpose of wireless sensing. However, there may be constraints associated with radar technology for sensing, as it is specialized for sensing and may not consider the characteristics of communication. Additionally, separate devices may be required for transmitting and receiving nodes to transmit and receive signals for wireless sensing. To address these issues, methods for using wireless sensing in wireless communication systems that support cellular networks, such as 5G and/or next-generation 6G, are actively being researched. For example, these methods include integrated sensing and communication (ISAC) or joint communication and sensing (JCAS).

In 3GPP standardization, studies for supporting ISAC in 5G/6G have been initiated. According to TR 22.837 published by 3GPP SA1 WG, wireless sensing is defined as a technology that uses radio waves to measure a distance, angle, or instantaneous velocity for the purpose of acquiring information on the environment and/or surrounding objects. A scenario where sensing and communication share the same frequency band and hardware is being considered. In addition, methods of sharing or reusing radio waves intended for communication (e.g., RSs for communication such as an SSB, DMRS, CSI-RS, and/or SRS) for radio waves for sensing or methods of designing separate radio waves for wireless sensing may also be considered.

In general, wireless sensing supported in ISAC involves a process where signals transmitted from the transmitter are reflected off a target object and received by the receiver. Depending on the relationship between the transmitter and receiver, different sensing modes may be defined. Based on whether the transmitter and receiver are matched, a case where the transmitter and receiver are matched may be defined as a mono-static sensing mode, and a case where the transmitter and receiver are not matched may be defined as a bi-static sensing mode.

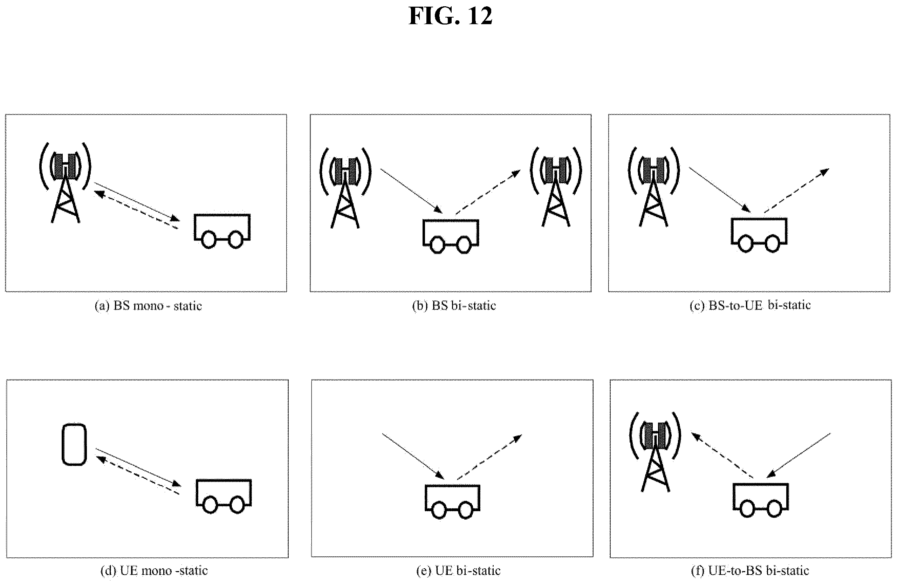

FIG. 12 illustrates examples of wireless sensing modes supported in ISAC.

Referring to FIG. 12, considering the transmission and reception operations in the 3GPP standard and the nodes participating therein, sensing modes may be broadly categorized as follows.

(a) BS mono-static sensing mode: A BS that transmits a radio wave receives a reflected signal.
(b) BS-to-BS bi-static sensing mode: Another BS receives a reflected signal of a radio wave transmitted by a specific BS.
(c) BS-to-UE bi-static sensing mode: A UE receives a reflected signal of a radio wave transmitted by a BS.
(d) UE mono-static sensing mode: A UE that transmits a radio wave receives a reflected signal.
(e) UE-to-UE bi-static sensing mode: Another UE receives a reflected signal of a radio wave transmitted by a specific transmitting UE.
(f) UE-to-BS bi-static sensing mode: A BS receives a reflected signal of a radio wave transmitted by a transmitting UE.

In addition to the six use cases described above, a sensing mode including multiple transmitting/receiving nodes may be referred to a multi-static sensing mode.

The application of wireless sensing through ISAC/JCAS is being considered in various scenarios. Generally, wireless sensing is considered for the purpose of acquiring information on a target with no communication module (or independent of communication modules). For example, considerable scenarios may be broadly divided into three scenarios.

(1) Object detection and tracking: This scenario aims to detect target objects or people and track location information. For example, the following scenarios: intrusion detection in indoor/outdoor environments, tracking the position of an unmanned aerial vehicle (UAV) or automated guided vehicle (AGV), and supporting autonomous driving may be considered.

(2) Environment monitoring: This scenario aims to collect information on the surrounding environment of transmitting/receiving nodes. For example, the following scenarios: rainfall observation and flood detection may be considered.

(3) Motion monitoring: This scenario aims to detect the motion of a target. For example, scenarios for distinguishing human movements or gestures may be considered.

The performance metrics and levels required for each of the above scenarios may vary and differ from one another. To design suitable ISAC/JCAS for the service quality required for each scenario, various key performance requirements need to be considered. In the 3GPP standard, TS 22.137, key performance requirements required for each service scenario are defined as follows: positioning estimation accuracy, velocity estimation accuracy, reliability (confidence level), sensing resolution, missed detection probability, false alarm probability, maximum sensing service delay, and refreshing rate. The required levels for each key performance requirement may vary depending on the service scenario.

**Validation conditions for SRS transmission available for multiple cells**

Hereinafter, SRS configurations capable of being used by UEs in the RRC inactive state across multiple cells and procedures related thereto will be described. The proposals to be described below may also be applicable to the aforementioned ISAC environment.

While the present disclosure focuses on transmission of an SRS for positioning (hereinafter referred to as SRS-p) performed by a UE in the RRC inactive state based on UL positioning in 3GPP NR, the proposed methods are not limited thereto and may generally be applicable to common positioning techniques where positioning is performed based on RSs transmitted by UEs, including UL positioning operations performed by a UE in the connected state. The proposed methods may be applied to all types of transmission and reception methods and positioning techniques expected by both the BS and UE.

The methods proposed in the present disclosure may be implemented independently without additional combinations or implemented in a combined form by combining one or more methods. Some of the terms, symbols, sequences, and so on used herein may be replaced with other terms, symbols, sequences, and so on.

In NR, UL positioning techniques based on SRS transmission by the UE are supported. In particular, the configuration of an SRS for positioning (SRS-p) may be separately configured and indicated. In addition, methods by which a plurality of TRPs receive an SRS-p transmitted by the UE and perform positioning based on the SRS-p are supported. In Rel-17, SRS-p transmission in the RRC inactive state to achieve power-saving benefits is introduced by supporting UL positioning of the UE in the RRC inactive state. To this end, the UE receives configuration information on an SRS-p to be used in the RRC inactive state via an RRC release message and transmits the SRS-p based on the configuration information and instructions.

The SRS-p configuration of the UE in the RRC inactive state, which is supported based on the current Rel-17 NR standard, may only be supported through the RRC release message described above. In this case, it is assumed that that the UE operates under the condition of maintaining camping-on within the serving cell where the UE obtains the RRC release message. If the UE has mobility and encounters a situation where the validation conditions for the configuration information on the SRS-p that the UE is capable of transmitting in the RRC inactive state are not satisfied (e.g., when the UE moves to a different cell), the UE may no longer be able to perform the SRS-p transmission based on the stored SRS-p configuration information. If the UE desires to continue UL positioning, the UE needs to perform the RRC connection process again to acquire new SRS-p configuration information. The SRS-p reconfiguration process based on entry into the connected state causes power consumption at the UE.

According to the Rel-17 NR standard, configuration parameters for an SRS-p that the UE in the RRC inactive state is capable of receiving via the RRC release message may include configuration parameters for a reference RS for pathloss calculation (i.e., PathlossReferenceRS-Pos). This parameter is configured on an SRS-p resource set basis. The UE may use the configured parameters to measure pathloss and determine the validity of SRS-p transmission and power control operations based on the measured pathless.

According to the Rel-17 NR standard, the configuration of an SRS-p that the UE in the RRC inactive state is capable of receiving via the RRC release message may include an RSRP change threshold parameter (i.e., RRC inactivePosSRS-RSRP-ChangeThreshold) to determine the validity of a timing advance (TA) (or timing alignment). This parameter is uniformly applied to all SRS-p resources (sets) received by the UE. The UE may calculate DL pathloss reference RSRP according to the criteria defined in TS 38.331 and determine the validity of the TA based on the DL pathloss reference RSRP.

In Rel-18 NR, positioning enhancements are being discussed to meet the requirements of UEs aiming for low power high accuracy positioning (LPHAP). To this end, power-saving techniques are being discussed to meet the target battery life requirement of the UE in the RRC inactive state, and as one of the power-saving techniques, enhancement methods for the SRS-p are being proposed. For example, to reduce power consumption at the UE due to the above-described SRS-p reconfiguration process, a method of allowing SRS-p configuration information configured in a specific cell to be maintained and used within the range of multiple cells (hereinafter referred to as SRS-p for multiple cell) may be considered.

As described above, according to the Rel-17 NR standard, the UE in the RRC inactive state may assume that the configuration information on the SRS-p is valid only in the last serving cell. Thus, PathlossReferenceRS-Pos also becomes invalid if the cell that the UE is camping on is changed. Accordingly, to maintain the configuration information on the SRS-p within the scope of multiple cells for LPHAP of Rel-18, a new operational method for PathlossReferenceRS-Pos needs to be introduced. In addition, depending on the new operational method for PathlossReferenceRS-Pos, new power control methods and validity mechanisms for the SRS-p, which operate based thereon, may also be required. Furthermore, new TA validation conditions may be required to maintain SRS-p transmission within the scope of single or multiple cells without any interruption.

Accordingly, the present disclosure proposes methods for supporting an SRS-p for multiple cells stably in consideration of the mobility of the UE in maintaining the RRC inactive state when the UE is configured with the SRS-p for multiple cells to be used in the RRC inactive state and performs SRS-p transmission based thereon. Specifically, the present disclosure proposes configuration methods for PathlossReferenceRS-Pos for supporting an SRS-p for multiple cells as well as UE power control methods and validation methods for the SRS-p for multiple cells based thereon. Furthermore, improved RSRP-based TA validation methods are also proposed to support stable SRS-p transmission, considering the mobility of the UE while maintaining the RRC inactive state within the scope of single or multiple cells.

Herein, the term PLRS-M (pathloss reference signal for measurement) is used to refer to an RS for pathloss measurement, which is configured and used for supporting an SRS-p for multiple cells. The term PLRS-M may correspond to the concept of an RS indicated by PathlossReferenceRS-Pos included in the SRS-p resource set configuration of the Rel-17 NR standard. Alternatively, the term PLRS-M may correspond to the concept of a DL pathloss reference used to calculate RSRP values to determine the validity of the TA for an SRS for positioning configured to the UE in the RRC inactive state.

Herein, the term PVA (positioning validation area) is used to refer to a range of cells where the UE is capable of maintaining and using configuration information on an SRS-p for multiple cells.

Herein, the terms BS or TRP are used to refer to a node that provides configuration information on an SRS-p to the UE and receives the SRS-p transmitted by the UE.

### [Proposal 1] PLRS-M configuration

Similar to the existing SRS-p power control operation method based on PathlossReferenceRS-Pos, a PLRS-M may be used for the power control of an SRS-p for multiple cells at the UE. Regarding the PLRS-M, if it is determined that PathlossReferenceRS-Pos configured based on the last serving cell is maintained, the probability of failure in receiving the PLRS-M increases due to a decrease in the SNR as the UE moves away from the last serving cell. In addition, as SRS-p transmission power increases, power consumption at the UE may increase, and interference to neighboring cells may also increase. Therefore, when the SRS-p for multiple cells is applied, a method of reselecting a suitable PLRS-M in a PVA is needed.

Accordingly, proposed are conditions and methods for reselecting a PLRS-M in a new cell where the UE is to camp on when the UE changes the cell that the UE is camping on upon being configured with SRS-p transmission for multiple cells. As a specific example, at least one of the following methods may be used.

[Proposal 1-1] Individual PLRS-M configurations for all cells included in PVA

Proposal 1-1 may include a method of selecting a PLRS-M for each cell separately for all cells within a PVA. If the UE performs relevant operations (e.g., RSRP measurement or power control for an SRS-p for multiple cells) with only one PLRS-M, the UE may be defined/configured to select and use the PLRS-M based on the cell that the UE is camping on.

At least one of the following options: Option 1-1-1, Option 1-1-2, and/or Option 1-1-3 or any combination thereof may be used as the criteria for selecting the PLRS-M for each cell within the PVA

(Option 1-1-1) The BS may be defined/configured to directly indicate information on a PLRS-M for specific cell(s) within the PVA. The indicated PLRS-M information may be the SSB index of the corresponding cell or the SSB index of another cell, or the index of a DL-PRS. The directly indicated PLRS-M information may be received by the UE via an RRC release message, which consists of the ID of each cell within the PVA and PLRS-M information related thereto. This option offers the advantage of enabling the BS to control UE operations in each cell.

(Option 1-1-2) The UE may be defined/configured to directly select a PLRS-M for specific cell(s) within the PVA. The information on the PLRS-M that UE is capable of selecting may be the SSB index of the corresponding cell or the index of a DL-PRS transmitted from the cell. To this end, the BS may provide the UE with information on cells where the UE is capable of directly selecting the PLRS-M. For example, the UE may be configured to receive explicit information for the information provision via an RRC release message, or the UE may be defined/configured to directly select the PLRS-M for all cells within the PVA where PLRS-M configuration information is not indicated. This option offers the advantage of reducing signaling overhead for the PLRS-M configuration.

(Option 1-1-3) The UE may be defined/configured to directly select information on a PLRS-M for specific cell(s) within the PVA. The information on the PLRS-M that the UE is capable of selecting may be the SSB index of another cell other than the cell that the UE is camping on or the index of a DL-PRS transmitted from the other cell other than the cell that the UE is camping on. To this ends, the BS may provide UE with information on the ID of the other cell used to select the PLRS-M in the specific cell(s). The information on the ID of the other cell used for the PLRS-M selection may be received by the UE via an RRC release message, which consists of the ID of each cell within the PVA and the ID of the other cell. This option offers the advantage of allowing the UE to select the PLRS-M in cells other than the cell that the UE is camping on, thereby reducing signaling overhead to some extent.

[Proposal 1-2] Individual PLRS-M configurations for some cells included in PVA.

Proposal 1-2 may include a method of selecting a PLRS-M for each cell separately for some cells within a PVA and ensuring that no PLRS-M is selected for the remaining cells. When the UE performs relevant operations (e.g., RSRP measurement or power control for an SRS-p for multiple cells) with only one PLRS-M, the UE may be configured to reselect and use a PLRS-M based on the cell that the UE is camping on if PLRS-M selection is allowed. On the contrary, if the PLRS-M selection is not allowed, the UE may be defined/configured to use the PLRS-M used in the cell that the UE is previously camping on.

At least one of the following options: Option 1-2-1 and/or Option 1-2-2 or any combination thereof may be used as the criteria for determining whether PLRS-M (re)selection is allowed for each cell within the PVA.

(Option 1-2-1) The BS may be defined/configured to directly indicate whether the PLRS-M (re)selection is allowed for specific cell(s) within the PVA. In this case, the directly indicated information may be provided as the ID of a cell where the PLRS-M (re)selection is permitted (or conversely, the ID of a cell where the PLRS-M (re)selection is not permitted), which may be provided to the UE via an RRC release message. This option offers the advantage of enabling the BS to control UE operations in each cell.

(Option 1-2-2) The BS may directly indicate information on a PLRS-M for only some cells within the PVA. In this case, the PLRS-M (re)selection is permitted only for the cells where the PLRS-M is directly indicated. For cells where no PLRS-M is directly indicated, the PLRS-M (re)selection may be defined/configured not to be permitted. The directly indicated PLRS-M information may be provided to the UE via an RRC release message, and for example, one of the options proposed in Proposal 1-1 may be used. Option 1-2-2 offers the advantage of not generating additional signaling overhead because the PLRS-M configuration information for each cell is reused.

According to Proposal 1, in an environment supporting an SRS-p for multiple cells, the UE is configured to select a suitable RS as a PRLS-M based on the location of the cell that the UE is camping on and perform relevant operations. Thus, the SRS-p for multiple cells may be supported stably, and the efficiency of UE operations may also be improved.

**[Proposal 2] Configuration of RSRP change threshold for supporting SRS-p for multiple cells**

In the existing SRS-p, an operation based on an RSRP change threshold, which determines the validity of SRS-p transmission based on DL pathloss reference RSRP, is supported. To this end, the BS may configure and provide a parameter RRC inactivePosSRS-RSRP-ChangeThreshold to the UE. This parameter may be applied within the last serving cell where the UE receives an RRC release message. If the difference between an RSRP value measured at a specific time and a DL pathloss reference RSRP value measured at a time when the UE receives the parameter is greater than or equal to RRC inactivePosSRS-RSRP-ChangeThreshold, the UE determines that TA validation conditions are not satisfied and suspends SRS-p transmission. Table 3 is an excerpt from 3GPP TS 38.321 where relevant operations are described.

[Table 3]

| 5.26 Positioning SRS transmission in RRC_INACTIVE |
|---|
| 5.26.1 General |

(continued)

Periodic and semi-persistent Positioning SRS can be configured for Positioning SRS transmission in RRC_INACTIVE.

The MAC entity shall, if the TA of the configured Positioning SRS is valid according to clause 5.26.2:

- transmit Positioning Periodic SRS or Semi-Persistent SRS defined in TS 38.214 [7].

**5.26.2 TA validation for SRS transmission in RRC_INACTIVE**

RRC configures the following parameters for validation for SRS transmission in RRC_INACTIVE:

- *inactivePosSRS-RSRP-ChangeThreshold:* RSRP threshold for the increase/decrease of RSRP for time alignment validation.

The MAC entity shall:

1> if the UE receives configuration for SRS transmission in RRC_INACTIVE:

2> store the RSRP of the downlink pathloss reference with the current RSRP value of the downlink pathloss reference as in TS 38.331.

1> else if the UE is configured with SRS transmission in RRC_INACTIVE:

2> if Timing Advance Command MAC CE is received for *inactivePosSRS-TimeAlignmentTimer* as in clause 5.2, or;

2> if Timing Advance Command or Absolute Timing Advance Command is received for Random Access procedure that is successfully completed:

3> update the stored downlink pathloss reference with the current RSRP value of the downlink pathloss reference.

The MAC entity shall consider the TA to be valid when the following condition is fulfilled:

1> compared to the stored downlink pathloss reference RSRP value, the current RSRP value of the downlink pathloss reference has not increased/decreased by more than *inactivePosSRS-RSRP-ChangeThreshold,* if configured; and

1> *inactivePosSRS-TimeAlignmentTimer* is running.

If, as in Proposal 1, PLRS-M reselection is performed for each cell within a PVA and the TA validation operation based on the RSRP change threshold defined in Rel-17 is applied uniformly, there may be cases where the TA conditions are not valid at the boundary regions of two cells depending on the value configured for the RSRP change threshold, which may discontinue the use of an SRS-p for multiple cells.

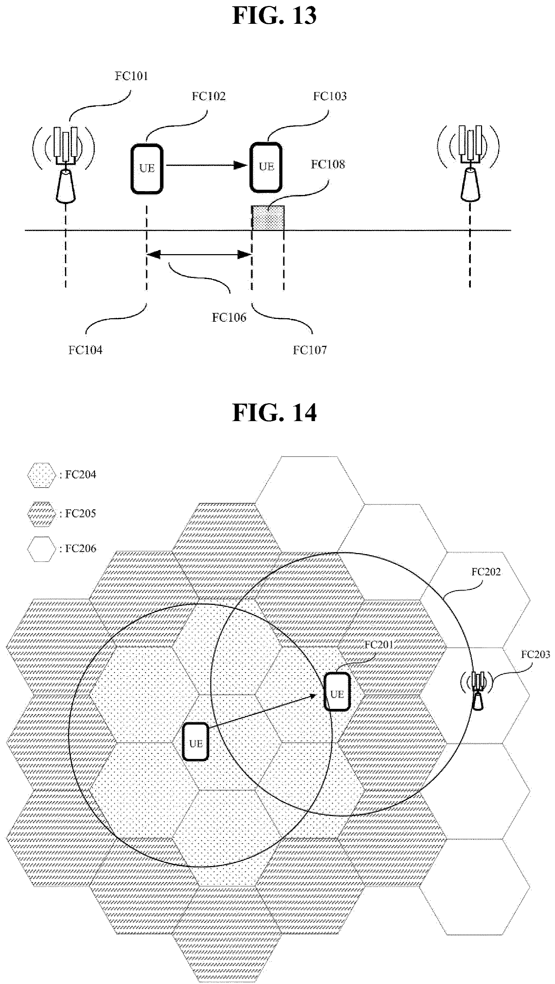

FIG. 13 is a diagram for explaining an issue that TA conditions are not valid at the boundary regions of two cells depending on the value of an RSRP change threshold.

Referring to FIG. 13, an area FC106 where SRS-p transmission for multiple cells is capable of being maintained based on a location FC104 where the UE initially receives an RRC release message from the last serving cell FC101 may be a range where changes within the RSRP change threshold are allowed based on an RSRP value measured at the location of FC104. FIG. 13 shows a case FC103 where the UE moves from an initial location FC102 and exceeds a maximum range FC107 of TA validation FC107 of the SRS-p for multiple cells. In this case, an area FC108 is an area where the TA validation conditions based on the RSRP change threshold are not satisfied. According to the rules defined by the standard, in the corresponding area, the UE determines that the SRS-p transmission for multiple cells is not valid and thus may not perform the SRS-p transmission for multiple cells.

The above issue may arise when the RSRP change threshold is set to a low value. To address this, a method of increasing the RSRP change threshold or a method of not applying the RSRP change threshold may be considered. However, when the above method is used, the following issues may arise: the occurrence of interference to cells outside the PVA or excessive reservation of SRS transmission resources.

FIG. 14 is a diagram for explaining a potential issue that may arise when an RSRP change threshold is set to a high value or not applied.

Referring to FIG. 14, the shaded area of FC204 represents cells within a PVA. The shaded area of FC205 represents cells that do not belong to the PVA but are expected to receive an SRS-p for multiple cells transmitted by the UE and thus do not allocate the same SRS transmission resources to other UEs. The shaded area of FC206 represents the remaining cells, that is, cells that do not expect to receive the SRS-p for multiple cells transmitted by the UE FC201 and/or are using the resources for the SRS-p for multiple cells used by the UE FC201 for other purposes. To prevent issues similar to the example in FIG. 13 from occurring when applying the method of validating the SRS-p for multiple cells based on the Rel-17 RSRP change threshold, a sufficiently large RSRP change threshold value needs to be configured to allow for the SRS-p transmission for multiple cells even in the boundary regions of cells where the UE expects to receive a PLRS-M. In this case, a range FC202 affected by the transmission signal for the SRS-p for multiple cells transmitted by the UE FC201, which is located at the outer edge of the PVA may fall within the reception range of the BS FC203 that does not expect to the signal.

To address these issues, the present disclosure proposes methods of supporting the UE to continuously transmit an SRS-p for multiple cells within a PVA and methods of preventing interference to unintended cells and unnecessary waste of SRS-p transmission resources.

For example, as described in Proposal 1, a structure where a PLRS-M is configured and selected separately for each different cell within a PVA may be considered. In this case, if the UE is camping on a specific cell within the PVA, and if the UE is capable of (re)selecting the PLRS-M while camping on the cell, the UE may be defined or configured to determine TA validity using an RSRP change threshold based on the (re)selected PLRS-M. If the UE is camping on a specific cell within the PVA, and if the UE is incapable of (re)selecting the PLRS-M while camping on the cell (e.g., maintaining the PLRS-M used in the previous camping-on cell), the UE may be defined or configured to continue using an RSRP change threshold applied to the previous camping-on cell to determine the TA validity.

In Proposal 2, one of the following methods may be used, or one or more methods may be used in combination.

[Proposal 2-1] Configuration of different RSRP change thresholds for cells or cell subgroups within PVA

Proposal 2-1 may include a method of allowing different RSRP change thresholds to be configured for cells within a PVA. For this purpose, configuration information on the PVA provided by the BS may include one or more RSRP change threshold values, and the configured RSRP change thresholds may correspond to different cells within the PVA. For example, different IDs may be assigned to RSRP change threshold values or relevant information, and the correspondence between cell IDs and RSRP change threshold IDs may be provided to the UE. As another example, when PLRS-M information is indicated for all or some cells within the PVA, RSRP change threshold values or relevant information may be defined or configured to be provided along with the indicated information. The above RSRP change threshold information may be received by the UE via an RRC release message.

For instance, cells located at the center of the PVA may be assigned higher RSRP change threshold values, while cells positioned at the boundaries may be allocated relatively smaller RSRP change thresholds. This operation method may be to prevent the interruption of SRS-p transmission for multiple cells when TA validation conditions are not met at the center of the PVA. In addition, the operation may allow for the suspension of the SRS-p for multiple cells at cells located at the boundaries of the PVA if necessary.

Proposal 2-1 may address issues such as unintended interruption of SRS-p transmission for multiple cells or interference within a PVA while maintaining TA validation based on an RSRP change threshold, which is similar to existing ones.

[Proposal 2-2] Method of not performing TA validity determination based on RSRP change threshold for some cells within PVA

Proposal 2-2 may include a method by which the UE only performs TA validity determination based on an RSRP change threshold for some cells within a PVA but does not perform the determination for the remaining cells. For this purpose, configuration information on the PVA provided by the BS may include information about cells where the RSRP change threshold is applied (or information about cells where the RSRP change threshold is not applied), which is be provided to the UE. For example, the information may be provided in the form of an on/off indicator corresponding to each cell ID, or the information may be provided to the UE in the form of a list of cell IDs. For example, the information may be provided to the UE in the form of on/off indicators corresponding to each cell ID, or the information may be provided in the form of a list of cell IDs. Information on the TA validity determination based on the RSRP change threshold may be received by the UE via an RRC release message.

Upon receiving the information, if the TA validation based on the RSRP change threshold is applicable to the location of the cell that the UE is camping on within the PVA, the UE may perform the TA validity determination based on the RSRP change threshold to determine whether to transmit the SRS for multiple cells. Otherwise, the UE does not perform the TA validity determination based on the RSRP change threshold. Alternatively, regardless of the TA validity determination based on the RSRP change threshold, the UE may be defined/configured to transmit the SRS-p for multiple cells unless there are additional restrictions.

As an example of applying Proposal 2-2, for cells located at the center of the PVA, the TA validity determination based on the RSRP change threshold may be configured not to be performed. For cells located at the boundaries, the TA validity determination based on the RSRP change threshold may be configured to be performed. This operation may be to prevent the interruption of SRS-p transmission for multiple cells when TA validation conditions are not met at the center of the PVA. In addition, the operation may allow for the suspension of the SRS-p for multiple cells at cells located at the boundaries of the PVA if necessary.

If it is necessary to prevent the SRS-p transmission for multiple cells at the UE in the PVA central area from being interrupted due to the RSRP change threshold conditions, Proposal 2-2 offers the following advantages: unnecessary operations of the UE may be skipped; and an upper node (e.g., BS or location server) may be controlled to determine the validity of the SRS-p transmission for multiple cells only for intended cells.

[Proposal 2-3] Method of simultaneously using multiple PLRSs-M and related RSRP values

The present disclosure proposes a method by which the UE measures multiple RSRPs using multiple PLRSs-M and determines to continue/suspend SRS-p transmission for multiple cells based thereon.

Specifically, at least one of the following options may be used.

(Option 2-3-1) Operation based on multiple RSRP change thresholds

As a specific example, when the UE determines that all TA validation based on multiple RSRP change thresholds fails, the UE may determine that the SRS-p transmission for multiple cells configured for a corresponding PVA is no longer valid and then suspend the transmission. For this purpose, the BS may configure two or more PLRSs-M to the UE. In addition, the UE may be defined/configured to measure RSRPs based on the results of receiving the two or more PLRSs-M and perform relevant operations.

As a specific example, the UE may be configured to perform TA validity determination based on two RSRP change thresholds. For one of the two RSRP change thresholds, the UE may be configured/defined to operate based on a PLRS-M selected based on the current camping-on cell (hereinafter referred to as a current rule), and for the other, the UE may be configured/defined to operate based on a PLRS-M selected based on the previous camping-on cell (hereinafter referred to as a previous rule). Considering both the previous rule and current rule above, if at least one of the two RSRP change thresholds satisfies TA validation conditions, the UE may be configured/defined to perform SRS-p transmission for multiple cells within the corresponding PVA. If the two RSRP change thresholds do not satisfy the TA validation conditions, the UE may be defined/configured to suspend the SRS-p transmission for multiple cells within the corresponding PVA.

As a specific example, the UE may be configured to perform TA validity determination based on two RSRP change thresholds. For one of the two RSRP change thresholds, the UE may be configured/defined to operate based on a PLRS-M selected based on the current camping-on cell (hereinafter referred to as a current rule), and for the other, the UE may be configured/defined to operate based on a PLRS-M selected based on one fixed cell (hereinafter referred to as a fixed rule). Considering both the fixed rule and current rule above, if at least one of the two RSRP change thresholds satisfies the TA validation conditions, the UE may be configured/defined to perform the SRS-p transmission for multiple cells within the corresponding PV. If the two RSRP change thresholds do not satisfy the TA validation conditions, the UE may be defined/configured to suspend the SRS-p transmission for multiple cells within the corresponding PVA. The fixed cell for performing the fixed rule may be determined as a cell (e.g. last serving cell) where the UE receives configuration information on the SRS-p for multiple cells. Alternatively, the BS may be defined/configured to indicate information on the ID of a specific cell (or PLRS-M) when providing the configuration information on the SRS-p for multiple cells. The above information may be provided through an RRC release message, which is received by the UE.

As a specific example, the UE may be configured to perform TA validity determination based on two RSRP change thresholds. For one of the two RSRP change thresholds, the UE may be configured/defined to operate based on a PLRS-M selected based on the current camping-on cell (hereinafter referred to as a current rule), and for the other, the UE may be configured/defined to operate based on a PLRS-M selected based on another cell that has a correspondence with the current camping on cell (hereinafter referred to as predefined rule). Considering both the predefined rule and current rule above, if at least one of the two RSRP change thresholds satisfies the TA validation conditions, the UE may be configured/defined to perform the SRS-p transmission for multiple cells within the corresponding PV. If the two RSRP change thresholds do not satisfy the TA validation conditions, the UE may be defined/configured to suspend the SRS-p transmission for multiple cells within the corresponding PVA. For the other cell that has the correspondence with the current camping-on cell for performing the predefined rule, the BS may be defined/configured to indicate information on the ID of a peer cell related to a specific cell (or a PLRS-M related to a specific PLRS-M) when providing the configuration information on the SRS-p for multiple cells. The above information may be provided through an RRC release message, which is received by the UE.

The size of the RSRP change threshold may be defined/configured to vary in different cells (or PLRSs-M). For example, when there are two cells, if cell A is a cell on which the UE is currently camping (current cell) and cell B is another cell (e.g. previous cell, fixed cell, or predefined cell), the size of the RSRP change threshold applied to cell B may be defined/configured to be larger than the size of the RSRP change threshold applied to cell A. This guarantees SRS-p transmission for multiple cells in the boundary regions of cell A and cell B and is intended to control the SRS-p transmission for multiple cells at locations that are within the boundary of cell A and are far from cell B.

Option 2-3-1 uses the conventional TA validation mechanism based on the RSRP change threshold while guaranteeing the SRS-p transmission for multiple cells in cell boundary regions within the PVA. In addition, depending on conditions, Option 2-3-1 may suspend the SRS-p transmission for multiple cells outside the PVA.

(Option 2-3-2) Operation based on difference in RSRPs measured from two different PLRSs-M

The difference between RSRPs measured from two PLRSs-M may be used. If the difference is less than or equal to (or less than) a specific threshold (hereinafter referred to as RSRP-D threshold), SRS-p transmission for multiple cells may be maintained. If the difference is more than (or more than or equal to) the RSRP-D threshold, SRS-p transmission for multiple cells may be suspended. To this end, the BS may configure two or more PLRSs-M to the UE. In addition, the UE may be defined/configured to measure RSRPs based on the results of receiving the two or more PLRSs-M and perform relevant operations. Further, the BS may configure the RSRP-D threshold and provide the RSRP-D threshold to the UE.

As a specific example, for one of the two RSRP change thresholds, the UE may be configured/defined to operate based on a PLRS-M selected based on the current camping-on cell (hereinafter referred to as a current rule), and for the other, the UE may be configured/defined to operate based on a PLRS-M selected based on the previous camping-on cell (hereinafter referred to as a previous rule). The UE calculates the difference between RSRPs (hereinafter P_RSRP and C_RSRP) measured according to the previous rule and current rule (e.g. C_RSRP - P_RSRP). If the difference is less than or equal to (or less than) the RSRP-D threshold, the UE may be defined/configured to perform the SRS-p transmission for multiple cells within a corresponding PVA. If the difference is more than or equal to (or more than) the RSRP-D threshold, the UE may be defined/configured to suspend the SRS-p transmission for multiple cells within the corresponding PVA.

As a specific example, for one of the two RSRP change thresholds, the UE may be configured/defined to operate based on a PLRS-M selected based on the current camping-on cell (hereinafter referred to as a current rule), and for the other, the UE may be configured/defined to operate based on a PLRS-M selected based on one fixed cell (hereinafter referred to as a fixed rule). The UE calculates the difference between RSRPs (hereinafter F_RSRP and C_RSRP) measured according to the fixed rule and current rule (e.g. C_RSRP - F_RSRP). If the difference is less than or equal to (or less than) the RSRP-D threshold, the UE may be defined/configured to perform the SRS-p transmission for multiple cells within the corresponding PVA. If the difference is more than or equal to (or more than) the RSRP-D threshold, the UE may be defined/configured to suspend the SRS-p transmission for multiple cells within the corresponding PVA. The fixed cell for performing the fixed rule may be determined by the UE as a cell (e.g. last serving cell) where the UE receives configuration information on the SRS-p for multiple cells. Alternatively, the BS may be defined/configured to indicate information on the ID of a specific cell (or PLRS-M) when providing the configuration information on the SRS-p for multiple cells. The above information may be provided through an RRC release message, which is received by the UE.

As a specific example, for one of the two RSRP change thresholds, the UE may be configured/defined to operate based on a PLRS-M selected based on the current camping-on cell (hereinafter referred to as a current rule), and for the other, the UE may be configured/defined to operate based on a PLRS-M selected based on another cell that has a correspondence with the current camping on cell (hereinafter referred to as predefined rule). The UE calculates the difference between RSRPs (hereinafter PD_RSRP and C_RSRP) measured according to the predefined rule and current rule (e.g. C_RSRP - PD_RSRP). If the difference is less than or equal to (or less than) the RSRP-D threshold, the UE may be defined/configured to perform the SRS-p transmission for multiple cells within a corresponding PVA. If the difference is more than or equal to (or more than) the RSRP-D threshold, the UE may be defined/configured to suspend the SRS-p transmission for multiple cells within the corresponding PVA. For the other cell that has the correspondence with the current camping-on cell for performing the predefined rule, the BS may be defined/configured to indicate information on the ID of a peer cell related to a specific cell (or a PLRS-M related to a specific PLRS-M) when providing the configuration information on the SRS-p for multiple cells. The above information may be provided through an RRC release message, which is received by the UE.

Option 2-3-2 provides simple UE operations because a single validation rule based on multiple RSRPs is applied while guaranteeing the SRS-p transmission for multiple cells in cell boundary regions within the PVA. In addition, depending on conditions, Option 2-3-2 may suspend the SRS-p transmission for multiple cells outside the PVA.

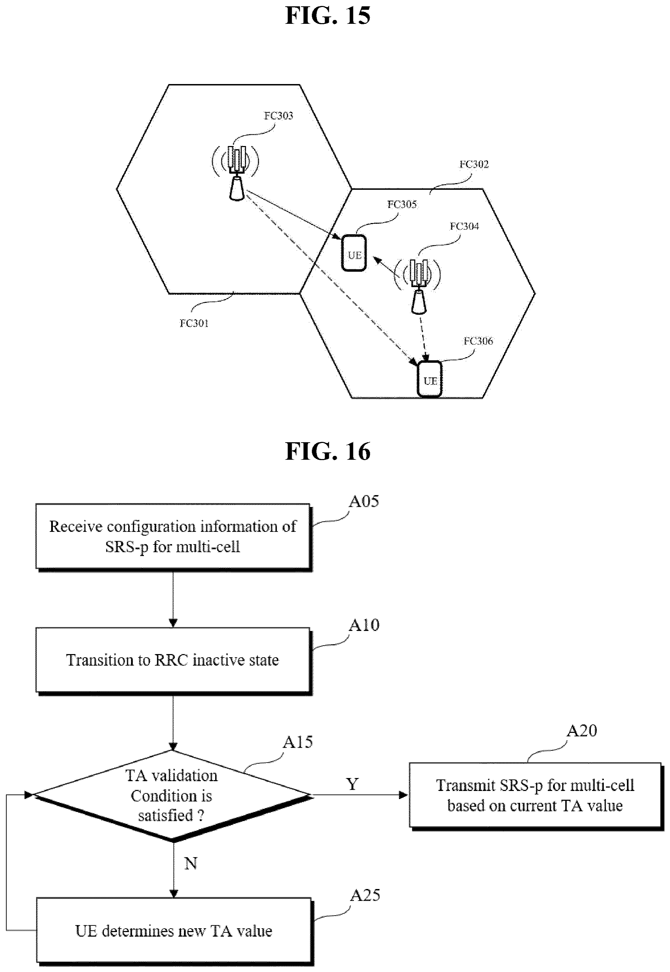

FIG. 15 illustrates an example of Proposal 2-3 where multiple PLRSs-M and RSRP values related thereto are used.

Referring to FIG. 15, a UE determines the validity of an SRS-p for multiple cells based on a PLRS-M transmitted from a BS FC304 of a cell FC302 that the UE is currently camping on and a PLRS-M transmitted from a BS FC303 of another cell FC301. If the UE locates between the BSs of the two cells (FC305), the UE may obtain an RSRP change threshold value satisfying the two PLRSs-M or obtain a relatively small difference in RSRPs, thereby maintaining SRS-p transmission for multiple cells. On the other hand, if the UE moves away from one cell or the two cells (FC306), the UE may fail to perform all TA validation using an RSRP change threshold based on two PLRSs-M or may obtain a relatively large RSRP difference, thereby suspending the SRS-p transmission for multiple cells.

[Proposal 2-4] Validity determination by applying RSRP threshold

Proposal 2-4 proposes a method of using an RSRP value to determine the validity of SRS-p transmission for multiple cells within a PVA. This means that TA validity determination criteria based on an RSRP change threshold used in other proposals are replaced with validity determination criteria based on an RSRP threshold. To this end, the BS may configure an RSRP threshold value used within the PVA and provide the RSRP threshold value to the UE. For example, the UE may receive configuration information on the SRS-p for multiple cells via an RRC release message.

For example, the UE may measure RSRP based on a PLRS-M used at the location of each cell in the PVA, and depending on whether the measured value satisfies the RSRP threshold, the UE may be defined/configured to determine the validity of the SRS-p for multiple cells.

For example, if Proposal 2-1 is used, the UE may be defined/configured to expect different RSRP threshold values to be configured for the location of each cell in the PVA and determine the validity of the SRS-p for multiple cells based thereon.

For example, if Proposal 2-2 is used, the UE may be defined/configured to determine the validity of the SRS-p for multiple cells based on the RSRP threshold at the locations of some cells within the PVA and not to perform the validation at the locations of the remaining cells.

For example, if Proposal 2-3 is used, the UE may be defined/configured to determine the validity of the SRS-p for multiple cells based on RSRP values measured from two cells within the PVA.

[Proposal 2-5] Autonomous TA adjustment of UE based on TA validity determination results

Proposal 2-5 proposes a method by which the UE autonomously adjusts a TA value when TA validation conditions for SRS-p transmission for multiple cells within a PVA are not satisfied. In particular, the proposed method may be applied to TA validation conditions based on RSRP changes.

As a specific method, the BS may provide the UE with configuration information on TA validity based on RSRP. For example, the information on the TA validity based on the RSRP may include an RSRP change threshold. If Proposal 2-1 of the present disclosure is used, different configurations and information may be provided for each TRP. Upon receiving the TA validity information based on the RSRP, the UE may determine whether the TA is valid according to the TA validation conditions based on RSRP. If the UE determines that the TA is invalid based on the TA validation conditions, the UE may be defined/configured to change the TA value.

In this case, the UE may be defined/configured to be autonomously determine the changed TA value. Alternatively, the TRP may preconfigure the TA value to be used and provide the TA value to the UE, and the UE may be defined/configured to select the TA value. If the changed TA value is determined by the UE, the UE may be defined/-configured to follow predetermined rules.

For instance, if the UE determines that the TA is invalid based on the TA validation conditions, the UE may autonomously determine a new TA value. The UE may determine whether the TA validation conditions are satisfied based on the new TA value. If the TA validation conditions are satisfied based on the new TA value, the UE may transmit the SRS-p based on the new TA value.

If the UE determines that the TA is valid based on the TA validation conditions, the UE may apply the TA value according to one of the following options. For example, the UE may determine that the TA is valid in one of the following cases: i) when TA invalidity does not occur, and thus TA validity is continuously maintained, or ii) when TA invalidity occurs, but a new TA value is used such that TA invalidation conditions are resolved

(Option 2-5-1) The UE may be defined/configured to use a TA value initially configured (e.g., TA value configured together when configuration information on TA validity based on RSRP is configured). When Option 2-5-1 is used, if the TA validation conditions are satisfied again even after the UE determines TA invalidity once, the UE may be defined/configured to use the initially set TA value again. This may be advantageous for the UE to select an appropriate TA based on the RSRP value based on a cell where the UE measures RSRP.

(Option 2-5-2) The UE may be defined/configured to maintain and use a previously used TA value (i.e. used for previous SRS-p transmission). When Option 2-5-2 is used, if the UE determines TA invalidity once and uses the changed TA value, it means that the UE maintains and uses the changed TA value

(Option 2-5-3) If the current camping-on cell of the UE is the last serving cell (i.e. the cell from which the UE receives configuration information on TA validity based on RSRP), the UE uses the initially configured TA value. If the current camping-on cell is changed to a different cell within a PVA, the UE may be defined/configured to use a new TA value (determined by the UE). The new TA value may be a TA value determined by the UE itself. If the previous SRS-p transmission is performed in the same camping cell as the current SRS-p transmission and TA validity is maintained for both the previous SRS-p transmission and current SRS-p transmission, the UE may be defined/configured to maintain and use the previously used TA value.

FIG. 16 illustrates an example of SRS transmission based on TA validation/adjustment according to Proposal 2-5.

Referring to FIG. 16, the UE may receive configuration information regarding an SRS-p for multiple cells (A05). The configuration information regarding the SRS-p for multiple cells may be received through RRC signaling. For example, the configuration information regarding the SRS-p for multiple cells may be received through an RRC release message.

The UE may transition from the RRC connected state to the RRC inactive state (A10).

The UE may determine whether TA validation conditions are satisfied in the RRC inactive state (A15). For example, the TA validation conditions may be configured based on RRC parameters obtained in the step in which the UE receives the configuration information regarding the SRS-p for multiple cells (A05). For example, the TA validation conditions may be configured based on RRC parameters received through the RRC release message. For example, the RRC parameters constituting the TA validation conditions may include at least one of inactivePosSRS-RSRP-Change-Threshold, inactivePosSRS-TimeAlignmentTimer, and/or the conditions proposed in the present disclosure in the RRC release message. However, the present disclosure is not limited thereto.

If the TA is determined to be valid based on the TA validation conditions, the UE may transmit the SRS-p for multiple cells based on a current TA value (A20). For example, if the current camping-on cell of the UE is the last serving cell (i.e. the cell from which the UE receives configuration information regarding TA validity based on RSRP), the UE may transmit the SRS-p for multiple cells based on the initially configured TA value.

If the TA is determined to be invalid based on the TA validation conditions, the UE may directly determine a new TA value (A25). If the TA validation conditions are satisfied for the new TA value directly determined by the UE, the corresponding TA value becomes the current TA value of the UE, and the UE may transmit the SRS-p for multiple cells based on the TA value (A20). For example, the TA validation conditions may not be satisfied due to a change in the camping-on cell, and in this case, the UE may autonomously determine the new TA value.

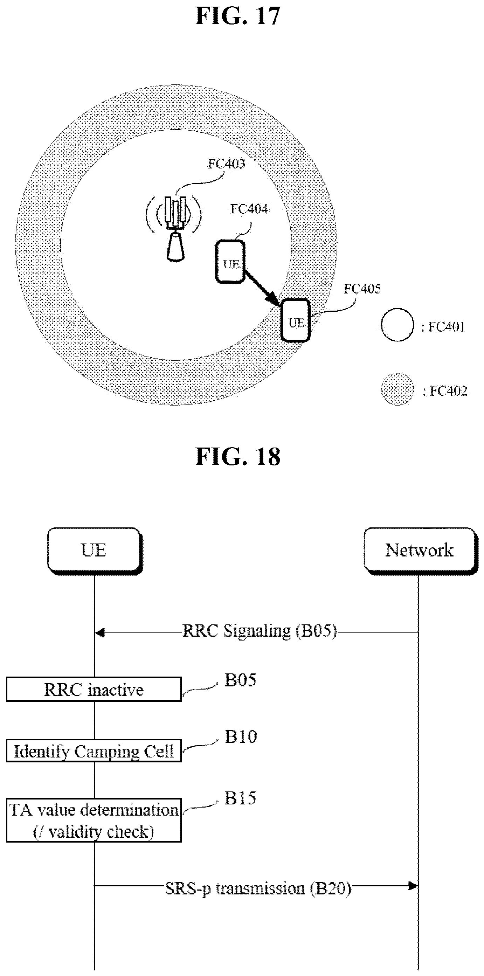

FIG. 17 is a diagram for explaining areas where TA validation conditions based on RSRP are satisfied/dissatisfied.

In FIG. 17, the shaded area of FC401 represents an area where the TA validation conditions based on RSRP are satisfied with respect to a BS FC403, and the shaded area of FC402 represents an area where the TA validation conditions based on RSRP are not satisfied. If a UE moves within the shaded area of FC401 (FC404), a TA value may be maintained and used. If the UE moves to the shaded area of FC402 (FC405), the TA value may be defined/configured to change.

**[Proposal 3] Conditions for maintaining SRS-p transmission for multiple cells when measurement of PLRS-M is inaccurate**

According to 3GPP TS 38.213, in the SRS-p transmission method for UEs in the RRC inactive state supported in the Rel-17 NR standard, it is defined that SRS-p transmission is not performed if the measurement for PathlossReferenceRS-Pos is determined to be inaccurate. This may be suitable for the purpose of preventing issues such as excessive interference to neighboring cells by suspending SRS-p transmission when it is difficult for the UE to calculate accurate pathloss for power control. Table 4 is an excerpt from 3GPP TS 38.213 in which the above content is described.

[Table 4]

| |
|---|
| If the UE is in the RRC_CONNECTED state and determines that the UE is not able to accurately measure $PL_{b,f,c}$ ($q_d$), or the UE is not provided with pathlossReferenceRS-Pos, the UE calculates $PL_{b,f,c}$ ($q_d$) using a RS resource obtained from the SS/PBCH block of the serving cell that the UE uses to obtain MIB. If the UE is in the RRC_INACTIVE state and determines that the UE is not able to accurately measure $PL_{b,f,c}$ ($q_d$), the UE does not transmit SRS for the SRS resource set. |

On the other hand, considering the situations and purposes where an SRS-p for multiple cells is supported, these rules may not be suitable. Within a PVA, especially around the center of the PVA, the reception of an SRS-p for multiple cells transmitted by the UE may be expected to target all cells within the minimum PVA. In addition, ensuring continuous SRS-p transmission for multiple cells without interruption may be advantageous for maintaining stable positioning performance. Moreover, in Rel-18, as described in this specification, there is a possibility of introducing methods to ensure the validation conditions of SRS-p transmission for multiple cells even in specific unfavorable pathloss situations. Hence, at least within the PVA, it may be necessary to prevent the interruption of SRS-p transmission for multiple cells due to pathloss conditions.

Similarly, in the case of SRS-SpatialRelationInfoPos, which is information on an RS for determining the spatial relation for the SRS-p, 3GPP TS 38.214 defines a mechanism for suspending SRS-p transmission when accurate measurement of the RS is not feasible. Similarly, it may not be desirable that the UE suspends the SRS-p transmission for multiple cells based on the measurement of SRS-SpatialRelationInfoPos. Table 5 is an excerpt from the 3GPP TS 38.214 in which the above content is described.

[Table 5]

| |
|---|
| If the UE in RRC_INACTIVE mode determines that the UE is not able to accurately measure the configured DL RS in SRS-SpatialRelationInfoPos for a SRS resource for positioning where the DL RS is semi-persistent or periodic, the UE stops transmission of the SRS resource for positioning. |

To address these issues, the present disclosure proposes methods for preventing SRS-p transmission for multiple cells performed by the UE based on RS measurements within a PVA. Hereinafter, the term "target RS" is used to refer to an RS indicated by PathlossReferenceRS-Pos and SRS-SpatialRelationInfoPos, and common elements applicable to both target RSs will be described. In addition, to describe independent elements, the terms "target RS-P" and "target RS-S" are used to refer to an RS indicated by PathlossReferenceRS-Pos and an RS indicated by SRS-SpatialRelationInfoPos, respectively. However, an operation of determining SRS-p transmission for multiple cells, applied to PathlossReferenceRS-Pos and SRS-SpatialRelationInfoPos, may be performed independently. Additionally, the proposed methods may be applicable even when different approaches are used.

Specifically, one of the following may be used, or one or more may be combined for use.

[Proposal 3-1] SRS-p transmission for multiple cells is allowed based on timer

Proposal 3-1 proposes a method of allowing the UE to transmit an SRS-p for multiple cells for a specific duration or a specific number of times based on that the UE is incapable of accurately measuring a target RS. For instance, the specific duration may be configured in the form of a timer, where the timer may be defined/configured to be counted starting from a time when the UE measures the target RS or from a time when the UE first transmits the SRS-p for multiple cells after an anomaly in the measurement of the target RS. Alternatively, the specific number of times may be determined by the number of times the UE transmits the SRS-p for multiple cells, where the specific number of times may be defined/configured to be counted starting from a time when the UE first transmits the SRS-p for multiple cells. For this purpose, the BS may provide the UE with the specific number of times or the specific duration, which may be provided via an RRC release message received by the UE together with configuration information on the SRS-p for multiple cells. Alternatively, predetermined values (e.g., values defined in the standard) may be defined/configured for the specific number of times or the specific duration.

As a specific method, even when the measurement of the target RS is inaccurate, the UE may be defined/configured to maintain the SRS-p transmission for multiple cells within a period where the specific duration is maintained or within a period where the specific number of times remains. In this case, if the UE succeeds in accurately measuring the target RS within the period where the specific duration is maintained or within the period where the specific number of times remains, the UE may be defined/configured to perform the SRS-p transmission for multiple cells. If the UE fails to accurately measure the target RS even after the period where the specific duration is maintained or after the specific number of times ends, the UE may be defined/configured to not transmit the SRS-p for multiple cells or to suspend the transmission.

When the proposed method is applied to the target RS-P, the UE may be defined/configured to determine TA validation conditions or perform power control based on the most recently accurately measured RSRP value.

When the proposed method is applied to the target RS-S, the UE may be defined/configured to determine the spatial relation based on the most recently accurately measured target RS-S and apply spatial filtering to the SRS-p for multiple cells based thereon.

Proposal 3-1 offers the advantage of ensuring that the SRS-p transmission for multiple cells is maintained to some extent even if the UE temporarily fails to measure the target RS within the PVA.

[Proposal 3-2] UE temporarily reselects different target RS

Proposal 3-2 proposes a method by which the UE selects and uses a different RS in a specific cell when the UE is incapable of accurately measuring a target RS for the corresponding cell.

As a specific method, if the UE determines that the measurement of the target RS used in the specific cell is inaccurate, the UE may be defined/configured to select a different target RS in the corresponding cell, measure the different target RS, and perform relevant operations based thereon. In this case, to select the different target RS, the UE may be defined/configured to select an RSs transmitted from the same cell as the target RS that the UE is using.

As another specific method, the BS may designate multiple target RSs in advance, and the UE may select a target RS among the multiple target RSs. In this case, priorities may also be assigned to the multiple target RSs.

The UE may be defined/configured to maintain SRS-p transmission for multiple cells if the UE has available target RSs and successfully measure at least one target RS. However, if such a condition is not met, the UE may be defined/configured to suspend the SRS-p transmission for multiple cells.

When Proposal 3-2 is applied to the target RS-P, the UE may be defined/configured to measure RSRP based on a newly selected target RS-P and then determine TA validation conditions or perform power control based thereon.
When Proposal 3-2 is applied to the target RS-S, the UE may be defined/configured to determine the spatial relation based on the newly selected target RS-S and apply spatial filtering to the SRS-p for multiple cells based thereon.

**[Proposal 4] Power control**

In general, power control for an SRS or SRS-p needs to be considered to ensure sufficient power for the BS to receive the transmitted SRS/SRS-p while addressing interference issues that may affect other cells. An SRS-p for multiple cells is being considered to enable the UE to transmit the SRS-p while the UE moves within a PVA. The SRS-p transmission for multiple cells may require different power control methods compared to conventional SRS-p transmission due to differences therebetween. For instance, in environments where the UE is surrounded by cells that desire to receive the SRS-p for multiple cells transmitted by the UE, such as the center of the PVA, it may be advantageous for the power of the UE to not fluctuate significantly to keep the number of cells capable of receiving the SRS-p for multiple cells from the UE as consistent as possible. On the other hand, in environments where cells that do not expect to receive the SRS-p for multiple cells transmitted by the UE are adjacent, such as the outskirts of the PVA, there is a need to prevent interference issues that may affect other cells through power control.
Table 6 shows the power control method for an SRS-p as defined in 3GPP TS 38.213.

[Table 6]

If a UE transmits SRS based on a configuration by *SRS-PosResourceSet* on active UL BWP *b* of carrier *f* of serving cell *c*, the UE determines the SRS transmission power $P_{SRS,b,f,c}(i, q_s)$ in SRS transmission occasion *i* as

$$P_{\mathrm{SRS},b,f,c}(i,q_s) = \min\left\{\begin{array}{l} P_{\mathrm{CMAX},f,c}(i), \\ P_{\mathrm{O\_SRS},b,f,c}(q_s) + 10\log_{10}(2^{\mu} \cdot M_{\mathrm{SRS},b,f,c}(i)) + \alpha_{\mathrm{SRS},b,f,c}(q_s) \cdot PL_{b,f,c}(q_d) \end{array}\right\}$$

[dBm]

where,
- $P_{\mathrm{O\_SRS},b,f,c}(q_s)$ and $\alpha_{\mathrm{SRS},b,f,c}(q_s)$ are provided by *p0-r16* and *alpha-r16* respectively, for active UL BWP *b* of carrier *f* of serving cell *c*, and SRS resource set $q_s$ is indicated by *SRS-PosResourceSetId* from *SRS-PosResourceSet,* and
- $PL_{b,f,c}(q_d)$ is a downlink pathloss estimate in dB calculated by the UE, as described in clause 7.1.1 in case of an active DL BWP of a serving cell c, using RS resource indexed $q_d$ in a serving or nonserving cell for SRS resource set $q_s$ [6, TS 38.214]. A configuration for RS resource index $q_d$ associated with SRS resource set $q_s$ is provided by *pathlossReferenceRS-Pos*
    - if a *ssb-IndexNcell* is provided, *referenceSignalPower* is provided by *ss-PBCH-BlockPower-r16*
    - if a *dl-PRS-ResourceId* is provided, *referenceSignalPower* is provided by *dl-PRS-ResourcePower*

Considering these issues, power control methods are proposed to support an SRS-p for multiple cells.

[Proposal 4-1] Configuring different power control parameter for each cell within PVA

Proposal 4-1 includes a method of assigning different power control parameters to different cells within a PVA. The power control parameters may include the p0 value and alpha value configured and provided by the BS to the UE. For example, the BS may separately configure a power control parameter related to each cell ID and provide the power control parameters to the UE. As another example, the BS may configure multiple power control parameters and provide the UE with information on the ID of a cell related to each parameter. Additionally, if there are cell IDs for which power control parameters are not directly specified, a method of configuring a default power control parameter for the cells may be included.

[Proposal 4-2] Fixing transmission power of SRS-p for multiple cells within PVA

Proposal 4-2 may include a method by which the UE to transmit an SRS-p for multiple cells by applying constant power to all or some cells within a PVA. In determining the constant power level, the UE may use the power value determined during the RRC release step. Alternatively, the BS may be defined/configured to configure and provide a predetermined power value to the UE.

If Proposal 4-2 is applied to only to some cells within the PVA, conventional methods (i.e., methods based on power control parameters and path loss) may be defined/configured to be applied for power control for the remaining cells. To this end, the BS may be defined/configured to configure and provide to the UE information on cells where the predetermined power value is applied, information on other cells, and/or power control parameters to be applied to some cells if necessary.

Hereinafter, constraints related to autonomous TA adjustment of the UE in SRS-p transmission for multiple cells transmission will be described.

To minimize the interference caused by the SRS-p to other signals/channels while the TRP receives the SRS-p transmitted from the UE and, at the same time, to ensure that the TRP may reliably receive the SRS-p transmitted by the UE, it is necessary to establish criteria for determining a UL timing at which the SRS-p is transmitted and agree upon the criteria in advance. As a common method used to determine the UL transmission timing of the UE, the TA value, which is configured/indicated/calculated based on the time at which the UE receives a DL RS, may be applied. In Rel-17, when the UE in the inactive state transmits an SRS-p, the TA value for determining the UL timing is defined as a fixed value within the cell. For example, the TA value acquired during the RRC release step, where the UE obtains configuration information on the SRS-p, may be used.

To support that the UE in the RRC inactive state maintains an SRS-p within the range of multiple cells, a method for determining the UL timing for SRS-p transmission needs to be determined. If an appropriate UL timing is not used, it may cause the TRP not to correctly receive the SRS-p transmitted by the UE or cause interference to transmission and reception of other signals/channels.

Hereinafter, methods for determining the UL timing at which the UE transmits an SRS-p for multiple cells and configuration information therefor will be described.

**[Proposal 5] Configuration/indication of allowed range of TA adjustment to UE**

A UL timing for the UE to transmit an SRS-p may be determined relative to a reference timing. In this case, the reference timing may be determined as the boundary of a time resource (e.g., slot or subframe) estimated as a time when the UE receives a DL RS from a specific cell. Hereinafter, proposed methods for determining a reference timing based on a DL RS will be described with the term "DL reference timing." Additionally, a TA value may be used as the relative timing. As a specific method, a point in time ahead of the DL reference timing by the TA value may be used as the reference for the UL timing used for SRS-p transmission.

One method for determining the UL timing is as follows: if the UE receives configuration information on an SRS-p for multiple cells, the UE may be defined/configured to fix, maintain, and apply a TA value determined based on a time at which the UE receives the configuration information or a TA value configured/instructed by the BS with a PVA. This method may be advantageous in terms of the power consumption efficiency of the UE by preventing unnecessary TA adjustment by the UE even if the same TA value is maintained, there are minimal constraints on SRS-p reception at the TRP and interference with other signals/channels because the coverage of cells within the PVA is not extensive and relatively similar.

On the other hand, when cells within the PVA have different coverage, if the UE determines the UL timing by maintaining the same TA for different cells, it may cause potential issues. For example, when the DL reference timing measured by the UE in the previous cell significantly differs from the DL reference timing measured in the current cell, if a fixed TA value is continuously used, the UL timing used by the UE for SRS-p transmission may vary significantly in proportion to changes in the DL reference timing. This may result in significant variations in the time at which the transmitted SRS-p is received by the TRP. According to the 3GPP NR standard, to support the TRP to reliably receive the SRS-p transmitted by the UE, the LMF may provide each TRP information on an expected time of receiving the SRS-p, which is called a search window. Upon receiving the information on the search window, the TRP may then perform the SRS-p reception based on the received information. If there is a sudden change in the UL timing, the SRS-p transmission may occur outside the search window, which may lead to a failure in the SRS-p reception. To prevent such issues, as another method for determining the UL timing, a method of allowing the UE to adjust and apply the TA value autonomously (referred to as TA adjustment) when a cell serving as the reference for DL and UL signals/channels for the UE (referred to as a camping cell) changes within the PVA may be considered. If the UE autonomously performs the TA adjustment in response to changes in the camping cell, the TA value used by the UE at the location of each cell may vary. As a result, the UL timing used as the basis for the SRS-p transmission and the time at which each TRP receives the SRS-p may vary.

If the UE performs the TA adjustment autonomously, upper nodes receiving the SRS-p including the TRP may not be aware of whether the UE changes the TA or the changed TA value. This is because, considering the general operation of the UE in the RRC inactive state, data transmission and reception using UE-dedicated channels are not feasible. Moreover, even when the UE is capable of performing UL transmission and reception, if reduction of UE power consumption is crucial as in LPHAP, reporting the results of the TA adjustment to the upper nodes may not be preferred. Therefore, if the TA value newly determined by the UE exceeds the expected range of upper nodes including the TRP expecting the SRS-p reception, the TRP may fail to receive the SRS-p properly, or interference may be caused to other signals/channels.

To address such issues, when the UE autonomously performs the TA adjustment, it is proposed to limit the range of TA values selected by the UE.

During the step of receiving configuration information on the SRS-p for multiple cells, the UE may also receive configuration information for performing the TA adjustment.

The configuration information for performing the TA adjustment may be updated and provided to the UE even when the UE is configured/indicated with new TA values or the size of the TA adjustment from the BS while maintaining the configuration information on the SRS-p for multiple cells. If the configuration information for performing the TA adjustment is not updated, the UE may be configured/defined to maintain the previously configured/indicated configuration information for performing the TA adjustment

It may be determined that the UE autonomously performs the TA adjustment only under specific conditions. For example, the specific conditions may be defined/configured as follows: when UE changes the camping cell.

The TA adjustment configuration information may include information for determining the range of new TA values that the UE is capable of determining based on the TA adjustment.

As a specific method, the maximum and/or minimum TA values capable of being selected by the UE may be configured and provided to the UE. In this case, the UE may be configured/defined to select a new TA value within a range that satisfies conditions of being below the maximum TA value and above the minimum TA value at the time of performing the TA adjustment.

As another specific method, a maximum value for relative TA changes regarding a fixed TA value configured to the UE may be configured and provided to the UE. In this case, when performing the TA adjustment, the UE may be configured to select a new TA value within a range that increases or decreases by the maximum TA changes with respect to the TA value configured by the BS (for example, the TA value configured/indicated at the time of receiving the configuration information on the SRS-p across multiple cells). Alternatively, the UE may be configured/defined to select a new TA value within a range that increases or decreases by the maximum TA changes, based on the TA value previously used in the camping cell.

If the TA adjustment configuration information does not include information for determining the range of new TA values that the UE is capable of determining based on the TA adjustment, the range of new TA values may be configured/defined to follow predefined rules (e.g., standardized and fixed rules). As a specific method, the rules may be determined as the maximum/minimum TA values or configured/defined as the relative maximum changes allowed for TA values.

Upon performing the TA adjustment, the UE may be configured/defined to determine the UL timing by applying the DL reference timing and the new TA value based on the current camping cell and perform the SRS-p transmission based thereon.

When the information on the TA adjustment is provided to the UE by the BS, the BS may be configured/defined to report relevant information to the LMF. Additionally/alternatively, the LMF may be configured/defined to provide information for configuring the TA adjustment to the BS or provide information on a value preferred by the LMF to the BS.

In the above, the proposals have been described based on the operation of performing the TA adjustment when the UE changes the camping cell. On the other hand, if the UE is allowed to perform the TA adjustment while maintaining the camping cell, Proposal 6 for determining the TA value based on the configuration information on the TA adjustment may be applied.

When the UE autonomously performs the TA adjustment, upper nodes such as the TRP or LMF may expect that TA values selectable by the UE fall within a certain range. This may be used to adjust the timing at which a specific TRP expects the SRS-p reception or to perform the SRS-p reception based on the information. Thus, SRS-p reception performance may be improved by configuring an appropriate search window for RTOA estimation, and interference issues between the SRS-p and other signals/channels may be avoided.

**[Proposal 6] Autonomous TA adjustment by UE is allowed only for some cells within PVA**

As discussed in Proposal 5, a method by which upon being configured with an SRS-p for multiple cells, the UE autonomously performs TA adjustment may be useful when there is variation in the coverage of cells within a PVA. As a simple example of applying Proposal 5, when the UE is configured to perform autonomous TA adjustment, the UE may be allowed to perform the autonomous TA adjustment for all cells within a PVA. Otherwise, the UE may use a fixed TA value (e.g., a TA value determined during the step of receiving configuration information on an SRS-p for multiple cells).

However, even when Proposal 5 is applied, the above TA adjustment may cause unnecessary processing of the UE if the coverage of the previous camping cell is the same as the coverage of the current camping cell. Alternatively, the TA adjustment may lead to the occurrence of situations where a wider TRP search window is required. Furthermore, considering that a suitable TA value for SRS-p transmission may vary depending on the coverage of the current camping cell of the UE, the range of suitable TA values for each cell within the PVA may also differ.

Considering these characteristics, a method of configuring/indicating different criteria for the UE to perform TA adjustment for each cell when the UE autonomously performs the TA adjustment is proposed.

During the step of receiving configuration information on an SRS-p for multiple cells, the UE may also receive configuration information for performing the TA adjustment.

The configuration information for performing the TA adjustment may be updated and provided to the UE even when the UE is configured/indicated with new TA values or the size of the TA adjustment from the BS while maintaining the configuration information on the SRS-p for multiple cells. If the configuration information for performing the TA adjustment is not updated, the UE may be configured/defined to maintain the previously configured/indicated configuration information for performing the TA adjustment

The TA adjustment configuration information may include a list of cells where the UE is capable of performing the TA adjustment. As a specific method, when the UE camps on cells configured/indicated by the TA adjustment configuration information, the UE may be configured/defined to autonomously determine a TA value and perform the SRS-p transmission by applying the TA value. The UE may use the TA value determined during the step of receiving the configuration information on the SRS-p for multiple cells at the locations of cells outside the PVA. Alternatively, the UE may be configured/defined to maintain and use the TA value last configured/indicated by the BS or the TA value last determined by the UE.

The TA adjustment configuration information may include information for determining the range of new TA values that the UE is capable of determining based on the TA adjustment. As a specific method, Proposal 5 may be applied. In this case, information for determining different ranges of TA values for each cell may be configured/defined. As a specific method, independently (or sub-grouped) allowable maximum/minimum TA value ranges or maximum TA changes may be configured for each cell where the TA adjustment is allowed within the PVA.

Upon performing the TA adjustment, the UE may be configured/defined to determine the UL timing by applying the DL reference timing and the new TA value based on the current camping cell and perform the SRS-p transmission based thereon.

When the information on the TA adjustment is provided to the UE by the BS, the BS may be configured/defined to report relevant information to the LMF. Additionally/alternatively, the LMF may be configured/defined to provide information for configuring the TA adjustment to the BS or provide information on a value preferred by the LMF to the BS.

In the above, the proposals have been described based on the operation of performing the TA adjustment when the UE changes the camping cell. On the other hand, if the UE is allowed to perform the TA adjustment while maintaining the camping cell, Proposal 6 for determining the TA value based on the configuration information on the TA adjustment may be applied.

When the UE autonomously performs the TA adjustment, unnecessary TA adjustment may be reduced in cases where the UE moves between some cells, thereby enhancing the power consumption efficiency of the UE. In addition, a search window suitable for SRS-p reception may be defined/configured. Moreover, the range of TA values may be configured/indicated in advance in consideration of the coverage of each cell, thereby enabling the BS or LMF to efficiently control the SRS-p transmission and reception of the UE.

(Summary) The contents of Proposals 1 to 6 are summarized as follows.

In NR Rel-17, a method by which the UE in the RRC_IDLE/INACTIVE state performs SRS transmission in a single cell has been introduced, where the UE performs an SRS validity check and determines the SRS transmission based on the SRS validity check.

In NR Rel-18, a method of extending an SRS transmitted from the UE in the RRC_IDLE/INACTIVE state to multiple cells for LPHAP is being discussed. In this case, a method for controlling different coverage of each cell and interference to undesired cells is required. However, according to the current NR standard, there is no dedicated channels for SRS control, and it is difficult to dynamically control SRS transmission when SRS invalidity occurs due to reasons such as a TA/power.

To address such issues and enable the UE in the RRC_IDLE/INACTIVE state to perform SRS transmission for multiple cells, methods for determining a TA/transmission power and determining SRS validity have been proposed. The following contents may be included.

- Methods for determining an RS for TA/power control in consideration of the characteristics of an SRS for positioning available in multiple cells
- Methods for determining the validity of a TA and power based on a determined RS and determine whether to maintain SRS transmission based on the validity

- Criteria and methods for the UE to autonomously perform adjustment of TA/power control in consideration of the characteristics of an SRS for positioning available in multiple cells.

In addition, the proposed content regarding autonomous TA values includes the following.

- Configuring a permissible range (maximum/minimum/changes) for TA adjustment to the UE
- Providing a list of cells where the UE is capable of performing TA adjustment
- Configuring information to determine different ranges of TA values for each cell

When the UE in the RRC_IDLE/INACTIVE state performs SRS transmission for multiple cells, TA and power control suitable for the SRS transmission for multiple cells may be used, thereby improving the performance of the SRS transmission and mitigating inter-cell interference issues preemptively.

FIG. 18 is a diagram for explaining operations of a UE and a network in a wireless communication system according to an embodiment.

Referring to FIG. 18, the network may transmit an SRS configuration related to a plurality of cells including a first cell to a UE through the first cell (B05). The SRS configuration may be transmitted via an RRC message instructing to transition from an RRC connected state to an RRC inactive state. The SRS configuration may include information related to TA validity determination. The SRS configuration may include information regarding a range of TA values that the UE is capable of autonomously determining. The information regarding the range of TA values may include at least one of: i) a maximum or minimum TA value; ii) a maximum variation in an initial TA value obtained at a time when the SRS configuration is provided; or iii) a maximum variation in a previous TA value. The SRS configuration may include a list of cells in which the UE is allowed to autonomously determine TA values.

The UE may transition from the RRC connected state to the RRC inactive state (B05).

The UE may check a current camping cell in the RRC inactive state (B10).

The UE may determine a TA value based on the current camping cell (B15). For example, the UE needs to check whether the TA value is valid before transmitting the SRS in the RRC inactive state. The TA value to be used for checking TA validity may be determined based on the current camping cell. The TA value for SRS transmission may be determined based on whether the camping cell is the first cell which has provided the SRS configuration. Based on that the cell in which the UE locates is a second cell different from the first cell, the TA value for the SRS transmission may be autonomously determined by the UE. Based on determination that the TA value autonomously determined by the UE is valid for the second cell, the SRS transmission may be performed. The second cell may be one of cells in which the UE is allowed to autonomously determine TA values. Based on that the cell in which the UE locates is the first cell which has provided the SRS configuration, the TA value for the SRS transmission may be determined as an initial TA value obtained at a time that the SRS configuration has been received.

The UE may transmit the SRS for positioning in the RRC inactive state based on the determined TA value (B20).

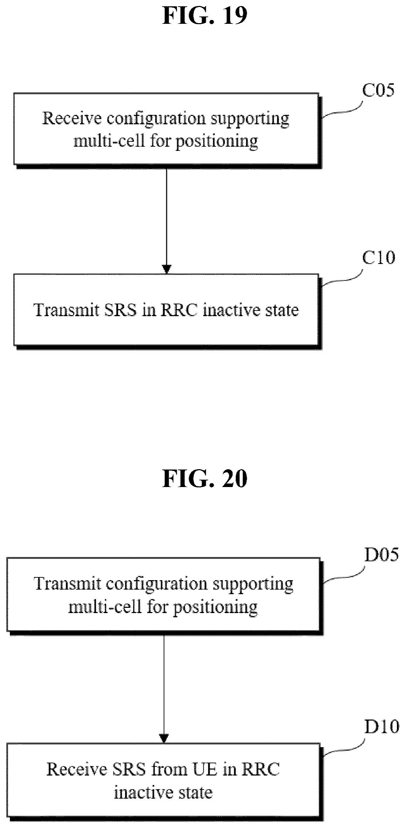

FIG. 19 illustrates a flowchart of a method by which a UE transmits an SRS according to an embodiment.

Referring to FIG. 19, the UE may receive an SRS configuration related to a plurality of cells including a first cell through the first cell (C05).

The UE may transmit an SRS for positioning based on the SRS configuration in an RRC inactive state (C10).

A timing advance (TA) value for the SRS transmission may be determined based on whether a cell in which the UE locates at a current time that the SRS is transmitted is the first cell which has provided the SRS configuration..

Based on that the cell in which the UE locates is a second cell different from the first cell, the TA value for the SRS transmission may be autonomously determined by the UE.

The SRS transmission may be performed based on a determination that the TA value autonomously determined by the UE is valid for the second cell.

The SRS configuration may include information regarding a range of TA values that the UE is capable of autonomously determining.

The information regarding the range of TA values may be related to at least one of: i) a maximum or minimum TA value; ii) a maximum variation in an initial TA value obtained at a time that the SRS configuration has been received; or iii) a maximum variation in a previous TA value.

The second cell may be one of cells in which the UE is allowed to autonomously determine TA values.

The SRS configuration may include a list of cells in which the UE is allowed to autonomously determine TA values.

Based on that the cell in which the UE locates is the first cell which has provided the SRS configuration, the TA value for the SRS transmission may be determined as an initial TA value obtained at a time that the SRS configuration has been received.

The SRS configuration may include information related to TA validity determination.

The SRS configuration may be received via an RRC message instructing to transition from an RRC connected state to the RRC inactive state.

FIG. 20 illustrates a flowchart of a method by which a device including at least one BS receives an SRS according to an embodiment.

Referring to FIG. 20, the at least one BS may transmit an SRS configuration related to a plurality of cells including a first cell to the UE through the first cell (D05).

The at least one BS may receive an SRS for positioning based on the SRS configuration from the UE in an RRC inactive state (D10).

The at least one BS may configure the UE to determine a TA value for transmission of the SRS based on whether a cell in which the UE locates is the first cell which has provided the SRS configuration.

Based on that the cell in which the UE locates is a second cell different from the first cell, the TA value for the SRS transmission may be autonomously determined by the UE.

The SRS transmission may be performed based on a determination that the TA value autonomously determined by the UE is valid for the second cell.

The SRS configuration may include information regarding a range of TA values that the UE is capable of autonomously determining.

The information regarding the range of TA values may be related to at least one of: i) a maximum or minimum TA value; ii) a maximum variation in an initial TA value obtained at a time that the SRS configuration has been received; or iii) a maximum variation in a previous TA value.

The second cell may be one of cells in which the UE is allowed to autonomously determine TA values.

The SRS configuration may include a list of cells in which the UE is allowed to autonomously determine TA values.

Based on that the cell in which the UE locates is the first cell which has provided the SRS configuration, the TA value for the SRS transmission may be determined as an initial TA value obtained at a time that the SRS configuration has been received.

The SRS configuration may include information related to TA validity determination.

The SRS configuration may be received via an RRC message instructing to transition from an RRC connected state to the RRC inactive state.

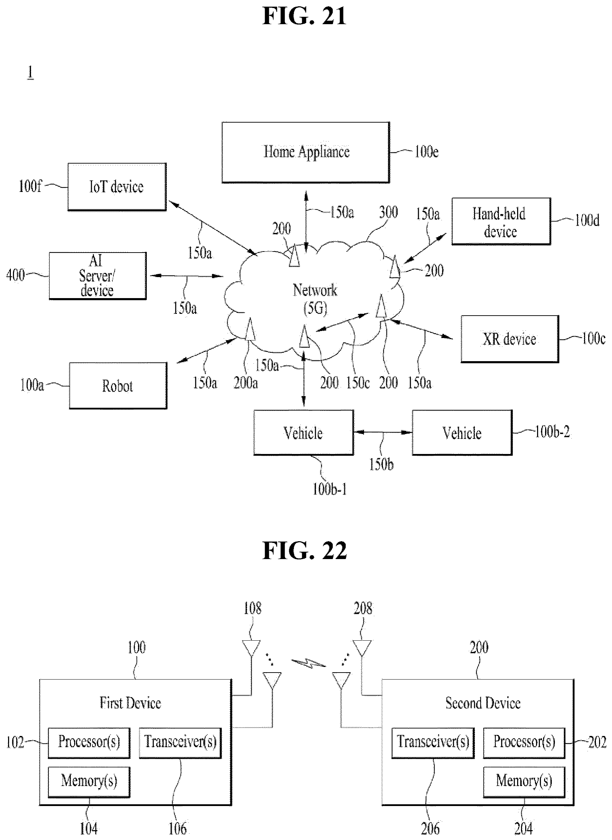

FIG. 21 illustrates a communication system 1 applied to the present disclosure.

Referring to FIG. 21, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 22 illustrates wireless devices applicable to the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

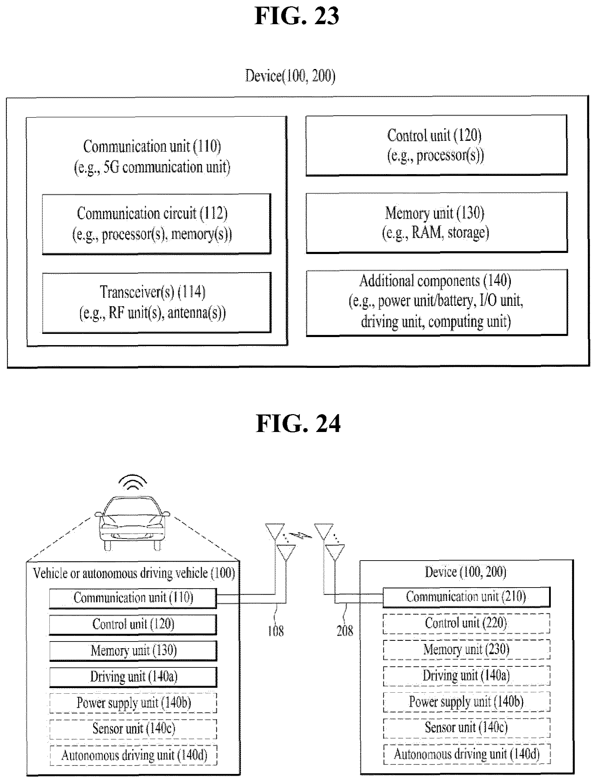

FIG. 23 illustrates another example of a wireless device applied to the present disclosure. The wireless device may be implemented in various forms according to a use-case/service (refer to FIG. 21).

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the handheld device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 24 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 24, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1. A method of transmitting a sounding reference signal (SRS) by a user equipment (UE) in a wireless communication system, the method comprising:

   receiving an SRS configuration related to a plurality of cells including a first cell through the first cell; and
   transmitting an SRS for positioning based on the SRS configuration in a radio resource control (RRC) inactive state,
   wherein a timing advance (TA) value for the SRS transmission is determined based on whether a cell in which the UE locates at a current time that the SRS is transmitted is the first cell which has provided the SRS configuration.

2. The method of claim 1, wherein based on that the cell in which the UE locates is a second cell different from the first cell, the TA value for the SRS transmission is autonomously determined by the UE.

3. The method of claim 2, wherein the SRS transmission is performed based on a determination that the TA value autonomously determined by the UE is valid for the second cell.

4. The method of claim 2, wherein the SRS configuration includes information regarding a range of TA values that the UE is capable of autonomously determining.

5. The method of claim 4, wherein the information regarding the range of TA values is related to at least one of:

   i) a maximum or minimum TA value;
   ii) a maximum variation in an initial TA value obtained at a time that the SRS configuration has been received; or
   iii) a maximum variation in a previous TA value.

6. The method of claim 2, wherein the second cell is one of cells in which the UE is allowed to autonomously determine a TA value.

7. The method of claim 6, wherein the SRS configuration includes a list of cells in which the UE is allowed to autonomously determine TA values.

8. The method of claim 1, wherein based on that the cell in which the UE locates is the first cell which has provided the SRS configuration, the TA value for the SRS transmission is determined as an initial TA value obtained at a time that the SRS configuration has been received.

9. The method of claim 1, wherein the SRS configuration includes information related to TA validity determination, and wherein the SRS configuration is received via an RRC message instructing to transition from an RRC connected state to the RRC inactive state.

10. A processor-readable recording medium having recorded thereon a program for performing the method of claim 1.

11. A device for wireless communication, the device comprising:

   a memory configured to store instructions; and
   a processor configured to perform operations by executing the instructions,
   wherein the operations of the processor comprise:

   receiving a sounding reference signal (SRS) configuration related to a plurality of cells including a first cell through the first cell; and
   transmitting an SRS for positioning based on the SRS configuration in a radio resource control (RRC) inactive state,

wherein a timing advance (TA) value for the SRS transmission is determined based on whether a cell in which the device locates at a current time that the SRS is transmitted is the first cell which has provided the SRS configuration.

12. The device of claim 11, further comprising a transceiver,
    wherein the device is a user equipment (UE) operating in a wireless communication system.

13. The device of claim 11, wherein the device is a processing device configured to control a user equipment (UE) operating in a wireless communication system.

14. A method of receiving a sounding reference signal (SRS) by at least one base station (BS) in a wireless communication system, the method comprising:

    transmitting an SRS configuration related to a plurality of cells including a first cell to a user equipment (UE) through the first cell; and
    receiving an SRS for positioning based on the SRS configuration from the UE in a radio resource control (RRC) inactive state,
    wherein the at least one BS configures the UE to determine a timing advance (TA) value for transmission of the SRS based on whether a cell in which the UE locates is the first cell which has provided the SRS configuration.

15. A device having at least one base station (BS), the device comprising:

    at least one memory configured to store instructions; and
    at least one processor configured to perform operations by executing the instructions,
    wherein the operations of the at least one processor comprise:

        transmitting a sounding reference signal (SRS) configuration related to a plurality of cells including a first cell to a user equipment (UE) through the first cell; and
        receiving an SRS for positioning based on the SRS configuration from the UE in a radio resource control (RRC) inactive state,
        wherein the at least one processor configures the UE to determine a timing advance (TA) value for transmission of the SRS based on whether a cell in which the UE locates is the first cell which has provided the SRS configuration.

# FIG. 1

| Initial Cell Search | System Information Reception | Random Access Procedure | General DL/UL Tx/Rx S18 |

PSS/SSS & [DLRS] & PBCH

PDCCH/ PDSCH (BCCH)

PRACH    PDCCH/ PDSCH    PRACH    PDCCH/ PDSCH

PDCCH/ PDSCH    PUSCH/ PUCCH

S11    S12    S13    S14    S15    S16    S17

• DL/UL ACK/NACK
• UE CQI/PMI/Rank Report using PUSCH and PUCCH

# FIG. 2

One Frame (10ms)

Half-Frame (5ms)    Half-Frame (5ms)

Subframe 0 (1ms)    Subframe 4 (1ms)    Subframe 5 (1ms)    Subframe 9 (1ms)

Subframe (1ms)

15KHz    Slot (14 symbols)
1ms

30KHz    Slot 0 (14 symbols)    Slot 1
500us

60KHz    Slot 0 (14 symbols)    Slot 1    Slot 2    Slot 3
250us

120KHz    Slot 0 (14 symbols)    Slot 1    Slot 2    Slot 3    Slot 4    Slot 5    Slot 6    Slot 7
125us

# FIG. 3

# FIG. 4

# FIG. 5

# FIG. 6

UL grant-to-PUSCH offset (K2)

PDCCH

PUSCH

# FIG. 7

Reference Source

GNSS signals (B)

LPP

Measurements(A,B or A+B) or Location

Target Device

Assistance Data

Location server

UE/SET

E-SMLC/SLP/LMF

- E-CID Location Information Transfer
- OTDOA Information Transfer
- Reporting of General Error Situations

radio signals (A)

NRPPa

Reference Source

ACCESS NODE / BS / TS / NG-RAN

# FIG. 8

# FIG. 9

(a)

(b)

**FIG. 10**

FIG. 11

## FIG. 12

(a) BS mono - static

(b) BS bi-static

(c) BS-to-UE bi-static

(d) UE mono -static

(e) UE bi-static

(f) UE-to-BS bi-static

# FIG. 13

FC101

FC102

FC103

FC108

UE → UE

FC104

FC106

FC107

# FIG. 14

: FC204

: FC205

: FC206

FC202

FC201

FC203

UE

UE

# FIG. 15

# FIG. 16

Receive configuration information of
SRS-p for multi-cell — A05

Transition to RRC inactive state — A10

TA validation
Condition is
satisfied ? — A15

Y → Transmit SRS-p for multi-cell
based on current TA value — A20

N

UE determines new TA value — A25

# FIG. 17

FC403

FC404

UE

FC405

UE

◯ : FC401

▓ : FC402

# FIG. 18

| UE | Network |
| --- | --- |

RRC Signaling (B05)

RRC inactive — B05

Identify Camping Cell — B10

TA value determination — B15
(/ validity check)

SRS-p transmission (B20)

# FIG. 19

Receive configuration supporting multi-cell for positioning — C05

Transmit SRS in RRC inactive state — C10

# FIG. 20

Transmit configuration supporting multi-cell for positioning — D05

Receive SRS from UE in RRC inactive state — D10

EP 4 694 402 A1

# FIG. 21

1

Home Appliance — 100e

IoT device — 100f

AI Server/ device — 400

Robot — 100a

Hand-held device — 100d

XR device — 100c

Network (5G)

Vehicle — 100b-1

Vehicle — 100b-2

150a  300  200  200a  150b  150c

# FIG. 22

108     208

100                           200

First Device                  Second Device

Processor(s) — 102           Transceiver(s) — 206
Transceiver(s) — 106         Processor(s) — 202
Memory(s) — 104              Memory(s) — 204

46

# FIG. 23

Device(100, 200)

| | |
|---|---|
| **Communication unit (110)** (e.g., 5G communication unit) | **Control unit (120)** (e.g., processor(s)) |
| Communication circuit (112) (e.g., processor(s), memory(s)) | Memory unit (130) (e.g., RAM, storage) |
| Transceiver(s) (114) (e.g., RF unit(s), antenna(s)) | Additional components (140) (e.g., power unit/battery, I/O unit, driving unit, computing unit) |

# FIG. 24

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

## INTERNATIONAL SEARCH REPORT

| International application No. |
|---|
| **PCT/KR2024/004495** |

| **A.** | **CLASSIFICATION OF SUBJECT MATTER** |
|---|---|

**H04W 56/00**(2009.01)i; **H04W 72/231**(2023.01)i; **H04W 72/21**(2023.01)i; **H04L 5/00**(2006.01)i; **H04W 76/27**(2018.01)i; **H04W 52/24**(2009.01)i

According to International Patent Classification (IPC) or to both national classification and IPC

| **B.** | **FIELDS SEARCHED** |
|---|---|

Minimum documentation searched (classification system followed by classification symbols)

H04W 56/00(2009.01); H04L 5/00(2006.01); H04W 72/12(2009.01); H04W 84/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SRS 설정(sounding reference signal configuration), 포지셔닝(positioning), RRC 비활성 상태(radio resource control inactive state), TA(timing advance), 복수의 셀들(multiple cells), 제1 셀(first cell)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | FUTUREWEI. Discussions of LPHAP enhancements. R1-2300064, 3GPP TSG-RAN WG1 Meeting #112. Athens, Greece. 17 February 2023.<br>　　See sections 1-2; and figure 1. | 1-15 |
| Y | ZTE. Discussion on low power high accuracy positioning. R1-2300806, 3GPP TSG-RAN WG1 Meeting #112. Athens, Greece. 17 February 2023.<br>　　See pages 2-10. | 1-15 |
| Y | WO 2021-237703 A1 (QUALCOMM INC.) 02 December 2021 (2021-12-02)<br>　　See paragraphs [0071]-[00106]; claim 1; and figure 9. | 4,5 |
| Y | MODERATOR (CMCC). Summary #4 for low power high accuracy positioning. R1-2302189, 3GPP TSG-RAN WG1 Meeting #112. Athens, Greece. 03 March 2023.<br>　　See pages 2-15. | 7 |
| A | KR 10-2017-0078530 A (ELECTRONICS AND TELECOMMUNICATIONS RESEARCH INSTITUTE) 07 July 2017 (2017-07-07)<br>　　See paragraphs [0376]-[0391] and [0462]-[0465]; claim 14; and figure 20. | 1-15 |

☐ Further documents are listed in the continuation of Box C.    ☑ See patent family annex.

| | |
|---|---|
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **15 July 2024** | **16 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/004495**

| Patent document cited in search report | | | Publication date (day/month/year) | Patent family member(s) | | | Publication date (day/month/year) |
|---|---|---|---|---|---|---|---|
| WO | 2021-237703 | A1 | 02 December 2021 | None | | | |
| KR | 10-2017-0078530 | A | 07 July 2017 | CN | 108352956 | A | 31 July 2018 |
| | | | | CN | 108352956 | B | 05 February 2021 |
| | | | | CN | 112867167 | A | 28 May 2021 |
| | | | | EP | 3399687 | A1 | 07 November 2018 |
| | | | | US | 10925085 | B2 | 16 February 2021 |
| | | | | US | 11589381 | B2 | 21 February 2023 |
| | | | | US | 11985685 | B2 | 14 May 2024 |
| | | | | US | 2018-0323917 | A1 | 08 November 2018 |
| | | | | US | 2021-0168853 | A1 | 03 June 2021 |
| | | | | US | 2023-0199788 | A1 | 22 June 2023 |
| | | | | WO | 2017-116125 | A1 | 06 July 2017 |

Form PCT/ISA/210 (patent family annex) (July 2022)